# EUROPEAN PATENT APPLICATION

(11) **EP 4 701 270 A1**
(43) Date of publication of application: **25.02.2026**
(21) Application number: 24813782.0
(22) Date of filing: 04.03.2024
(51) Int. Cl.: H04W 48/00

(54) **METHOD AND APPARATUS BASED ON NETWORK SLICE COMMUNICATION, AND TERMINAL DEVICE**

(30) Priority: 29.05.2023 CN 202310621613
(71) Applicant: Honor Device Co., Ltd., Shenzhen, Guangdong 518040 (CN)
(72) Inventor: ZHONG, Haijing, Shenzhen, Guangdong 518040 (CN); PANG, Gaokun, Shenzhen, Guangdong 518040 (CN)
(74) Representative: MERH-IP Matias Erny Reichl Hoffmann Patentanwälte PartG mbB
(86) International application number: PCT/CN2024/079941
(87) International publication number: WO 2024/244576

(57) **Abstract**

This application relates to the field of communication, and provides a method and apparatus based on network slice communication and a terminal device. The terminal device determines, based on a first service identifier, first S-NSSAI used to indicate a first network slice, and determines, based on the first S-NSSAI, a target processing module of a data channel that is processed by using a co-processor. In this way, performing physical layer processing on data by using the co-processor and through the target processing module can significantly improve a processing speed and real-time performance. For S-NSSAI of different network slices, different target processing modules can be determined based on the different S-NSSAI, so that when resource and power are wasted due to non-differential scheduling of calculation resources of the co-processor in different network slice scenarios can be avoided, requirements of different application scenarios on real-time performance can be satisfied, and flexibility of a processing process can be improved.

## Description

This application claims priority to Chinese Patent Application No. 202310621613.6, filed with the China National Intellectual Property Administration on May 29, 2023 and entitled "METHOD AND APPARATUS BASED ON NETWORK SLICE COMMUNICATION AND TERMINAL DEVICE", which is incorporated herein by reference in its entirety.

### TECHNICAL FIELD

This application relates to the field of communication, and specifically, to a method and apparatus based on network slice communication and a terminal device.

### BACKGROUND

Currently, the development of mobile communication is diversified, and a plurality of emerging application scenarios emerge in the 5G era, such as enhanced mobile broadband (enhanced mobile broadband, eMBB) (for example, live streaming, a cloud game, and an ultra-high definition video), ultra-reliable and low latency communications (ultra-reliable and low latency communications, URLLC) (for example, self-driving and an automated factory), and massive internet of thing (massive internet of thing, mloT) (for example, massive sensors deployed in measurement, agriculture, architecture, logistics, and a smart city). Different application scenarios have different requirements on a network. To satisfy network requirements of different application scenarios, a network slice technology emerges. The network slice technology may provide different network capabilities for different users in a targeted manner, so that different requirements of different application scenarios are satisfied in a same network, and objectives of flexible resource scheduling and customized design are achieved.

It can be learnt that, different network slices have different requirements on real-time performance (namely, a delay) of a network, and how to better satisfy real-time requirements of different network slice scenarios is a technical problem that urgently needs to be resolved currently.

### SUMMARY

Embodiments of this application provide a method and apparatus based on network slice communication and a terminal device, to satisfy requirements of different network slice scenarios on real-time performance without wasting resources and power.

According to a first aspect, a method based on network slice communication is provided, applied to a terminal device, where the method includes:
generating a first service identifier in response to a user operation, where the first service identifier is used to identify a currently to-be-performed first service;
determining, based on the first service identifier, first network slice selection assistance information S-NSSAI corresponding to the first service identifier, where the first S-NSSAI is used to indicate a first network slice corresponding to the first service;
determining, based on the first S-NSSAI, a target processing module of a data channel that is processed by using a co-processor, where the target processing module includes at least some of all processing modules of the data channel; and
processing, by using the co-processor and through the target processing module, first data related to the first service.

In the method based on network slice communication provided in this embodiment of this application, the terminal device determines, based on the first service identifier, the first S-NSSAI used to indicate the first network slice, and determines, based on the first S-NSSAI, the target processing module of the data channel that is processed by using the co-processor. In this way, compared with performing physical layer processing on data by using a CPU, performing physical layer processing on data by using the co-processor and through the target processing module can significantly improve a processing speed and real-time performance. In addition, the target processing module of the data channel is determined based on the first S-NSSAI, and for S-NSSAI of different network slices, different target processing modules can be determined based on the different S-NSSAI, so that a case in which resource and power are wasted due to non-differential scheduling of calculation resources by using the co-processor in different network slice scenarios can be avoided, requirements of different application scenarios on real-time performance can be satisfied, and flexibility of a processing process can be improved. Therefore, in this embodiment of this application, network slice-based adaptive acceleration without causing resource and power waste is generally implemented, and the requirements of different application scenarios on the real-time performance are satisfied.

With reference to any implementation of the first aspect, the terminal device includes an application module, a user route selection policy URSP module, and a protocol stack; and
the generating a first service identifier in response to a user operation includes:

The application module generates the first service identifier in response to the user operation, and the method further includes:

The application module sends the first service identifier to the URSP module;
the determining, based on the first service identifier, first S-NSSAI corresponding to the first service identifier includes:

The URSP module determines the first S-NSSAI based on the first service identifier; and the method further includes:

The URSP module sends the first S-NSSAI to the protocol stack;
the determining, based on the first S-NSSAI, a target processing module of a data channel that is processed by using a co-processor includes:

The protocol stack determines the target processing module based on the first S-NSSAI; and
the processing, by using the co-processor and through the target processing module, first data related to the first service includes:

The protocol stack invokes the co-processor, where the co-processor processes the first data through the target processing module.

In the method based on network slice communication provided in this embodiment of this application, a process of performing physical layer acceleration processing on data is completed through interaction between modules. The protocol stack includes a higher layer protocol stack and the physical layer, and processing on the data needs to be performed based on each layer of the protocol stack. The target processing module is determined through the protocol stack, so that the protocol stack invokes a GPU to perform physical layer processing on the data, and an implementation process is relatively convenient.

With reference to any implementation of the first aspect, after the sending, by the URSP module, the first S-NSSAI to the protocol stack, the method further includes:

The protocol stack establishes a packet data unit PDU session with a network device based on the first S-NSSAI;
the protocol stack generates a slice service interface corresponding to the first S-NSSAI after establishment of the PDU session is completed;
the protocol stack sends service interface information used to indicate the slice service interface to the URSP module;
the URSP module determines, based on the slice service interface, a slice data interface corresponding to the slice service interface; and
the URSP module sends data interface information used to indicate the slice data interface to the application module, to enable the application module to transmit service data through the slice data interface.

In the method based on network slice communication provided in this embodiment of this application, the slice data interface is an interface of the application module, and the slice service interface is an interface of a slice channel. Uplink service data sent through the slice data interface cannot be automatically sent through the slice channel, or downlink service data sent through the slice service interface cannot be automatically sent to the application module through the slice data interface. In this embodiment of this application, the URSP module determines a corresponding slice data interface based on the slice service interface, and binds the two slice interfaces, so that the service data can be normally transmitted through the slice service interface and the slice data interface. That is, for received uplink service data that is sent through the slice data interface, the URSP module forwards the uplink service data to the protocol stack through the slice service interface corresponding to the slice data interface, to transmit the uplink service data through the slice channel of the slice service interface. Alternatively, for received downlink service data transmitted through the slice service interface, the URSP module forwards the downlink service data to the application module through the slice data interface corresponding to the slice service interface, to implement normal transmission of network slice-based service data (the uplink service data and the downlink service data).

With reference to any implementation of the first aspect, the application module is configured in an application layer, the URSP module is configured in an application framework layer, and the protocol stack is configured in a modem.

In the method based on network slice communication provided in this embodiment of this application, in comparison to a solution in which the URSP module is configured in a modem of a device such as a mobile phone or a tablet computer, configuring the URSP module in the application framework layer to implement a URSP function does not relate to modification of content of the modem, so that admission difficulty of participating, by a developer, in emulation of a network slice technology of a 5G terminal can be reduced, and flexibility of implementing the URSP function can be improved.

With reference to any implementation of the first aspect, the application module is configured in an application layer, and both the URSP module and the protocol stack are configured in the application layer.

In the method based on network slice communication provided in this embodiment of this application, in comparison to a solution in which the URSP module is configured in an operating system of a device such as a computer, configuring the URSP module in the application layer to implement a URSP function does not relate to modification of content at an operating system layer, which can reduce admission difficulty of participating, by a developer, in emulation of a network slice technology of a 5G terminal, and improve flexibility of implementing the URSP function.

With reference to any implementation of the first aspect, the protocol stack is configured in software-defined radio SDR, and the URSP module is configured in the SDR.

In the method based on network slice communication provided in this embodiment of this application, both the URSP module and the protocol stack are integrated into the SDR, so that integration of a plurality of functional modules can be better implemented, memory occupation is reduced, and system management is facilitated.

With reference to any implementation of the first aspect, the determining, based on the first S-NSSAI, a target processing module of a data channel that is processed by using a co-processor includes:
determining, based on the first S-NSSAI, the target processing module corresponding to the first S-NSSAI in first correspondences between a plurality of pieces of S-NSSAI and a plurality of groups of processing modules, where one piece of S-NSSAI corresponds to at least one group of processing modules.

In the method based on network slice communication provided in this embodiment of this application, the target processing module corresponding to the first S-NSSAI is determined by the first correspondences between the plurality of pieces of S-NSSAI and the plurality of groups of processing modules, so that a design can be simplified, and implementation can be facilitated.

With reference to any implementation of the first aspect, the first correspondences include an uplink correspondence and a downlink correspondence, where the uplink correspondence is used to indicate a one-to-one correspondence between M pieces of S-NSSAI and M groups of processing modules, the downlink correspondence is used to indicate a one-to-one correspondence between N pieces of S-NSSAI and N groups of processing modules, and both M and N are integers greater than or equal to 1.

In the method based on network slice communication provided in this embodiment of this application, the first correspondences include the uplink correspondence and the downlink correspondence. Uplink transmission and downlink transmission are fully considered, and physical layer acceleration processing on uplink transmission and downlink transmission can be maximally provided for more network slices, to better satisfy requirements of different application scenarios on real-time performance.

With reference to any implementation of the first aspect, the determining, based on the first service identifier, first S-NSSAI corresponding to the first service identifier includes:
determining, based on the first service identifier, the first S-NSSAI in second correspondences between a plurality of service identifiers and the plurality of pieces of S-NSSAI, where at least one service identifier corresponds to one piece of S-NSSAI.

With reference to any implementation of the first aspect, the target processing module includes a first target processing module, the first target processing module is a processing module of a physical uplink shared channel PUSCH, and the first data includes signaling or uplink service data that is transmitted through the PUSCH.

With reference to any implementation of the first aspect, the first service is a live streaming service, a data backhaul service, or a real-time monitoring service.

With reference to any implementation of the first aspect, the target processing module includes a second target processing module, the second target processing module is a processing module of a physical downlink shared channel PDSCH, and the first data includes signaling or downlink service data that is transmitted through the PDSCH.

With reference to any implementation of the first aspect, the first service is a video service or an audio service.

With reference to any implementation of the first aspect, the target processing module includes a first target processing module and a second target processing module, the first target processing module is a processing module of a physical uplink shared channel PUSCH, the second target processing module is a processing module of a physical downlink shared channel PDSCH, the first data includes signaling or uplink service data that is transmitted through the PUSCH, and the first data includes signaling or downlink service data that is transmitted through the PDSCH.

With reference to any implementation of the first aspect, the first service is a cloud game service.

With reference to any implementation of the first aspect, the co-processor is any one of the following processors: a graphics processing unit GPU, an image signal processor ISP, a digital signal processor DSP, a neural network processor NPU, and a field-programmable gate array FPGA.

According to a second aspect, a terminal device is provided. The terminal device is configured to perform the method provided in the foregoing first aspect. Specifically, the terminal device may include modules configured to perform any possible implementation in the foregoing first aspect.

According to a third aspect, a terminal device is provided, including a processor. The processor is coupled to a memory, and may be configured to execute instructions in the memory, to implement the method in any possible implementation in the foregoing first aspect. Optionally, the terminal device further includes the memory. Optionally, the apparatus further includes a communication interface, and the processor is coupled to the communication interface.

According to a fourth aspect, a computer-readable storage medium is provided, storing a computer program. The computer program, when being executed by an apparatus, enables the apparatus to implement the method in any possible implementation in the foregoing first aspect.

According to a fifth aspect, a computer program product including instructions is provided. The instructions, when being executed by a computer, enables an apparatus to implement the method in any possible implementation in the foregoing first aspect.

According to a sixth aspect, a chip is provided, including: an input interface, an output interface, a processor, and a memory. The input interface, the output interface, the processor, and the memory are connected through an internal connection path. The processor is configured to execute code in the memory. When the code is executed, the processor is configured to perform the method in any possible implementation in the foregoing first aspect.

### BRIEF DESCRIPTION OF DRAWINGS

FIG. 1 is a schematic diagram of an architecture of a communication system to which an embodiment of this application is applicable.
FIG. 2 is a schematic flowchart of a PDU session establishment process according to an embodiment of this application.
FIG. 3 shows a user plane protocol stack of 5G according to an embodiment of this application.
FIG. 4A is an example block diagram of a processing process of a physical layer of a PDSCH at a transmitting end according to an embodiment of this application.
FIG. 4B is an example block diagram of a processing process of a physical layer of a PDSCH at a receiving end according to an embodiment of this application.
FIG. 5A is an example block diagram of a processing process of a physical layer of a PUSCH at a transmitting end according to an embodiment of this application.
FIG. 5B is an example block diagram of a processing process of a physical layer of a PUSCH at a receiving end according to an embodiment of this application.
FIG. 6 is an architecture diagram of software and hardware of a terminal device according to an embodiment of this application.
FIG. 7 is an architecture diagram of another software and hardware of a terminal device according to an embodiment of this application.
FIG. 8 is an example flowchart of a method based on network slice communication according to an embodiment of this application.
FIG. 9 is another example flowchart of a method based on network slice communication according to an embodiment of this application.
FIG. 10 is another example flowchart of a method based on network slice communication according to an embodiment of this application.
FIG. 11 is another example flowchart of a method based on network slice communication according to an embodiment of this application.
FIG. 12 is another example flowchart of a method based on network slice communication according to an embodiment of this application.
FIG. 13 is an example block diagram of an apparatus according to an embodiment of this application.
FIG. 14 is a schematic diagram of a structure of an apparatus according to an embodiment of this application.

### DESCRIPTION OF EMBODIMENTS

The following describes technical solutions of this application with reference to the accompanying drawings.

The technical solutions in embodiments of this application may be applied to various communication systems that can support a network slice, for example, a 5th generation (5th generation, 5G) system or a future 6th generation (6th generation, 6G) system.

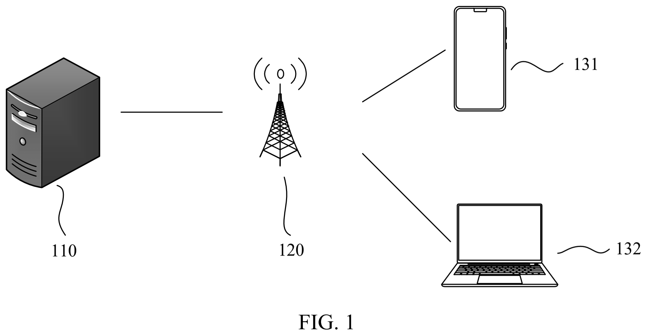

FIG. 1 is a schematic diagram of an architecture of a communication system to which an embodiment of this application is applicable. As shown in FIG. 1, the communication system includes a core network device 110, an access network device 120, and at least one terminal device (for example, a terminal device 131 and a terminal device 132 shown in FIG. 1). The terminal device is connected to the access network device in a wireless manner, and the access network device is connected to the core network device in a wireless or wired manner. The core network device and the access network device may be different physical devices that are independent of each other, or functions of the core network device and logical functions of the access network device may be integrated into a same physical device, or some functions of the core network device and some functions of the access network device may be integrated into one physical device. The terminal device may be located at a fixed position, or may be mobile. FIG. 1 is only a schematic diagram. The communication system may further include other network devices, for example, may further include a wireless relay device and a wireless backhaul device, which are not shown in FIG. 1. A quantity of core network devices, a quantity of access network devices, and a quantity of terminal devices that are included in the mobile communication system are not limited in this embodiment of this application.

It should be understood that, the terminal devices, the access network devices, and the core network devices in this embodiment of this application are all devices that can support a network slice.

The access network device in this embodiment of this application is an access device through which the terminal device accesses the communication system in a wireless manner, which may be a base station NodeB, an evolved base station (evolved NodeB, eNodeB), a transmission reception point (transmission reception point, TRP), a next generation base station (next generation NodeB, gNB) in a 5G mobile communication system, a base station in a future mobile communication system, or an access node in a Wi-Fi system, or may be a radio controller in a cloud radio access network (cloud radio access network, CRAN) scenario. Alternatively, the access network device may be a relay station, a vehicle-mounted device, a wearable device, a network device in a future evolved PLMN network, or the like. A specific technology and a specific device form that are used by the access network device are not limited in the embodiments of this application.

The terminal device in the embodiments of this application may also be referred to as a terminal (Terminal), user equipment (user equipment, UE), a mobile station (mobile station, MS), a mobile terminal (mobile terminal, MT), and the like. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in the embodiments of this application.

Technical terms and related processing processes that are used in the embodiments of this application are first explained in the following.

### Network slice

A network slice means that a 5G network is divided into "many slices", and each slice satisfies different user requirements. Currently, a user requirement on a 4G network is not further divided, and a network capability is fixed regardless of a requirement. In fact, different users have different requirements on a network. For example, a live streaming user has a higher requirement on uploading, and a game user has a requirement on a low latency. A network slice technology may provide different network capabilities for different users in a targeted manner, to satisfy requirements of different service scenarios on a network.

In the network slice technology, a network does not need to be constructed for each application scenario, but a physical network is divided into a plurality of virtual logical networks, and each virtual network corresponds to a different application scenario. This is referred to as a network slice.

In 3GPP, main types of network slices of 5G are classified into the following three types: a network slice of an eMBB type, a network slice of an mloT type, a network slice of a URLLC type, and the like. Main requirements of the network slice of the eMBB type on a network are a high bandwidth and a low latency. For example, a mobile phone may access the network slice of the eMBB type to perform services such as high-speed downloading, watching a 4K high-definition video, performing live streaming, and performing a cloud game. The network slice of the URLLC type is mainly oriented to a terminal of internet of vehicles, and the terminal has a relatively high requirement on a delay and reliability. The network slice of the mloT type is mainly oriented to a terminal of internet of things. The terminal has requirements of a large scale, low mobility, low power consumption, a relatively low rate, and a high data capacity. For example, a sensor device may access a network slice of an mMTC type to transmit a small data packet (for example, perform data collection) and update system configuration. In addition, there may be different network slices under network slices of each type. For example, for the network slice of the eMBB type, there may be network slices respectively applied to different scenarios such as a high-definition video, network live streaming, and a cloud game. That is, the high-definition video scenario corresponds to one network slice (for example, a network slice 11) in the network slice of the eMBB type, the network live streaming scenario corresponds to another network slice (for example, a network slice 12) in the network slice of the eMBB type, and the cloud game scenario corresponds to another network slice (for example, a network slice 13) in the network slice of the eMBB type.

To implement network slicing, network function virtualization (network function virtualization, NFC) is a prerequisite. The so-called NFV means transferring software and hardware functions (such as a mobility management entity (mobility management entity, MME) in a core network or a distributed unit (distributed unit, DU) in a radio access network) of a dedicated device in a network to virtual machines (virtual machines, VMs). These virtual machines are commercial servers based on an industry standard, and are commercial off-the-shelf products that have low costs and are easy to install. In short, a dedicated network element device in a network is replaced with a server, a storage, and a network device that are based on an industry standard.

After function virtualization is performed on a network, the wireless access network part is referred to as an edge cloud (edge cloud), and the core network part is referred to as a core cloud (core cloud). VMs in the edge cloud and VMs in the core cloud are interconnected through a software defined network (software defined network, SDN).

Currently, network slices mainly include network slices of two types: a standardized global universal network slice and a network slice customized by an operator.

### User route selection policy (UE route selection policy, URSP) rule

Based on a network slice, the URSP rule describes correspondences between a plurality of services and a plurality of network slices. At least one service may correspond to one network slice. An electronic device may select different network slices for different services based on the correspondences described in the URSP rule. For example, for a high-definition video service in eMBB, a corresponding network slice 11 may be selected, and for a live streaming service in eMBB, a corresponding network slice 12 may be selected. For a data collection service in mloT, a corresponding network slice 21 may be selected. For a self-driving service in URLC, a corresponding network slice 31 may be selected.

Different services may be identified by using different service identifiers, and one service is identified by using one service identifier. For example, a video service is identified by using a service identifier 1, a massive internet of things service may be identified by using a service identifier 2, and a live streaming service may be identified by using a service identifier 3.

Different network slices may use different single network slice selection assistance information (single network slice selection assistance information, S-NSSAI) identifiers, that is, one network slice uses one S-NSSAI identifier.

S-NSSAI includes SST information used to indicate a type of a single network slice or SST information of a service type (slice/service type, SST), and the SST information is of 1 byte (byte). Currently, when a value of the SST information is 1, it indicates that a type or a service type of the network slice is an eMBB type. In this case, the SST information may also correspond to binary 00000001 of 1 byte. When a value of the SST information is 2, it indicates that a type or a service type of the network slice is a URLLC type. In this case, the SST information may also correspond to binary 00000010 of 1 byte. When a value of the SST information is 3, it indicates that a type or a service type of the network slice is an mloT type. In this case, the SST information may also correspond to binary 00000011 of 1 byte.

For example, the S-NSSAI further includes SD (slice differentiator, SD) information used to identify a slice differentiator. The SD information includes 3 bytes. As a supplement to the SST information, the SD information is used to further distinguish a plurality of network slices of the same SST. For example, for a network slice of an eMBB type, the SD information may further indicate a network slice of a type such as a high-definition video, network live streaming, or a cloud game.

In this embodiment of this application, the URSP rule may be obtained from a network, or may be obtained from a local universal platform. This is not limited.

### Packet data unit (packet data unit, PDU) session

A network slice is carried through a PDU session, and one PDU session can carry only one network slice. After determining the network slice, an electronic device initiates a PDU session based on the network slice to a core network through the access network device, to implement a connection between the electronic device and a network, and perform uplink transmission and downlink transmission.

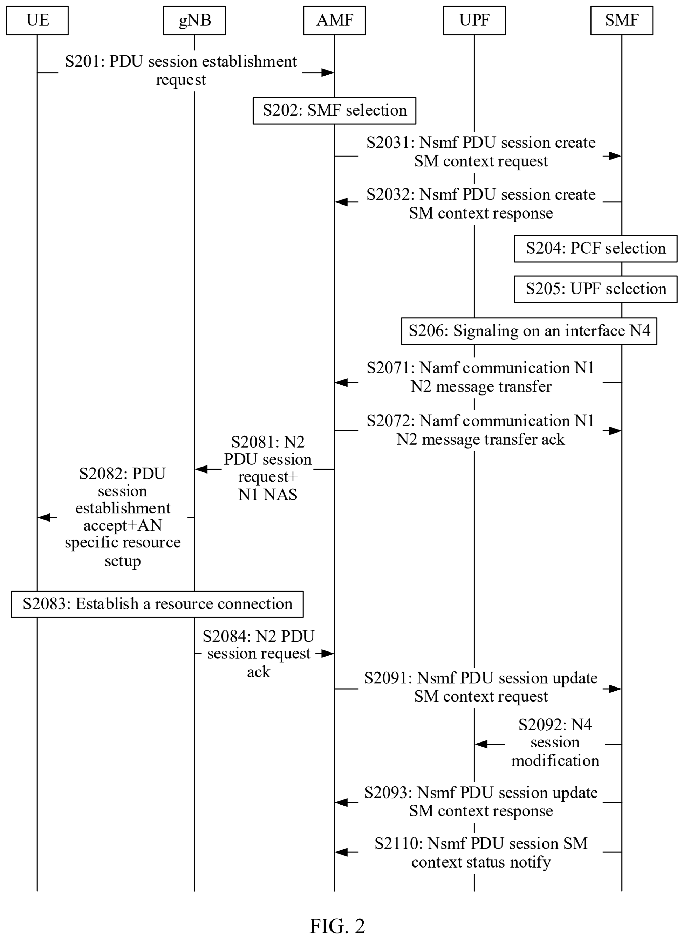

FIG. 2 is a schematic flowchart of a PDU session establishment process according to an embodiment of this application. An example in which UE is used as a terminal device and an example in which a gNB is used as an access network device are used to describe the PDU session establishment process.

It should be noted that, the PDU session establishment process shown in FIG. 2 is a simplified process, and shows important steps of the PDU session establishment process. For remaining related details, refer to related descriptions of an existing standard protocol (for example, the section 4.3.2.2 in the protocol TS 23502), and details are not described herein again.

Step S201: The UE sends a PDU session establishment request (PDU session establishment request) to an access and mobility management function (access and mobility management function, AMF) through the gNB. The PDU session establishment request may include information such as a PDU session ID, a requested PDU session type, S-NSSAI, and a data network name (data network name, DNN).

Step S202: The AMF selects an appropriate session management function (session management function, SMF) based on the PDU session establishment request.

Step S2031: The AMF sends an Nsmf PDU session create SM context request to the SMF, which includes information such as a PDU session establishment request, a subscription permanent identifier (subscription permanent identifier, SUPI), a DNN, an AMF ID, and user location information.

Step S2032: The SMF replies an Nsmf PDU session create SM context response to the AMF in response to the Nsmf PDU session create SM context request.

Step S204: The SMF performs policy control function (Policy Control Function, PCF) selection, to obtain policy data.

Step S205: The SMF performs user plane function (user plane function, UPF) selection, and allocates an IP address or a prefix to the UE. If IPv6 is related to, the SMF allocates an interface identifier to the UE for forming a link-local address.

Step S206: The SMF and the UPF complete signaling interaction based on an N4 interface.

Step S2071: The SMF sends an Namf communication N1 N2 message transfer message to the AMF. It may be understood that, the SMF sends information about an interface N1 and an interface N2 to the AMF through the message. The message includes:
a PDU session establishment response (PDU Session Resource Setup Accept) replied to the UE by the AMF and a resource establishment request (AN-specific resource setup) initiated by the SMF to a gNB.

Step S2072: The AMF sends an Namf communication N1 N2 message transfer ack message to the SMF.

Step S2081: The AMF sends an N2 PDU session request (namely, a PDU session resource setup request) message and an N1 NAS message to the gNB. The N2 PDU session request is used to request to create an N2 PDU session, and the N1 NAS message includes a PDU session establishment accept message and an AN-specific resource setup message initiated by the SMF.

Step S2082: The AMF transparently transmits, to the UE through the gNB, the PDU session establishment accept message and the AN-specific resource setup (AN-specific resource setup) message initiated by the SMF.

Step S2083: The UE establishes a resource connection to the gNB based on the AN-specific resource setup message.

Step S2084: The gNB replies an N2 PDU session request ack (namely, PDU Session Resource Setup Response) message to the AMF, where the message carries downlink media plane tunnel endpoint information on the gNB side.

In this case, a transmission channel used for uplink transmission is completed, and uplink transmission may be performed.

Step S2091: The AMF sends an Nsmf PDU session update SM context request message to the SMF. The message carries a resource establishment response replied by the gNB to the SMF.

Step S2092: The SMF initiates N4 session modification signaling to the UPF, to negotiate downlink media plane tunnel information on the gNB side.

Step S2093: The SMF replies an Nsmf PDU session update SM context response message to the AMF.

Step S2110: The SMF sends an Nsmf PDU session SM context status notify (Nsmf PDU Session Notify SM Context Status) message to the AMF.

In this case, a transmission channel used for downlink transmission is completed, and downlink transmission may be performed.

### Protocol stack and higher layer protocol stack

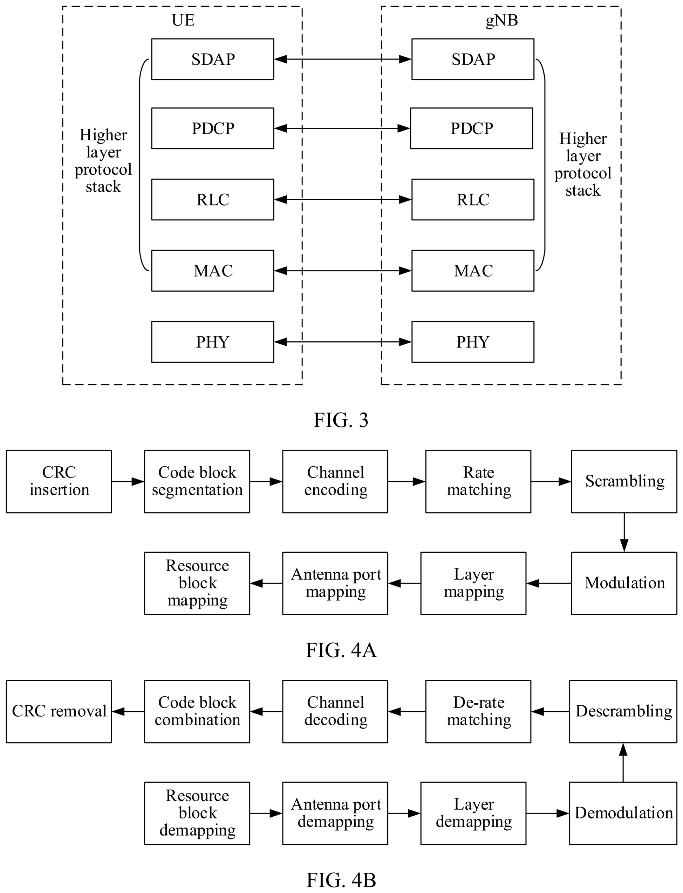

FIG. 3 shows a user plane protocol stack of 5G according to an embodiment of this application.

For a terminal device (for example, UE) and an access network device (for example, a gNB), for example, the user plane protocol stack includes a service data adaptation protocol (service data adaptation protocol, SDAP) layer, a packet data convergence protocol (packet data convergence protocol, PDCP) layer, a radio link control (radio link control, RLC) protocol layer, a media access control control element (media access control control element, MAC) layer, and a physical layer (physical layer, PHY). The terminal device and the access network device can interact with each other through signaling at each layer.

The SDAP layer is a sub-layer newly added to a user plane of 5G/NR. One of functions of the layer is performing mapping between a quality of service (quality of service, QoS) flow and a data radio bearer (data radio bearer, DRB). In the 5G/NR, an interface between the gNB and a 5G core network is a newly added interface, the interface is based on the QoS flow, and an air interface is based on a DRB bearer of a user, in other words, the air interface is based on the DRB bearer starting from the PDCP. Therefore, an adaptation sub-layer SDAP needs to be newly added in the 5G/NR, to map the QoS to the DRB.

The PDCP layer is used for data transmission, SN sequence number management, PDCP PDU duplicate detection, encryption and decryption, integrity protection, and the like.

The RLC layer used for being responsible for segmentation/concatenation, retransmission control, duplication detection, and sequence transfer to a higher layer.

The MAC layer is used for controlling logical channel multiplexing, hybrid ARQ retransmission, and uplink scheduling and downlink scheduling. The MAC serves the RLC in a form of a logical channel.

The PHY layer is used for implementing data encoding/decoding, modulation/demodulation, multi-antenna mapping, and a physical layer function of another type (refer to the following detailed descriptions of a processing process of the physical layer). The physical layer provides a service for the MAC layer in a form of a transmission channel.

In this embodiment of this application, the higher layer protocol stack includes layers above the PHY layer in the protocol stack. For example, in FIG. 3, the user plane higher layer protocol stack includes the MAC layer, the PLC layer, the PDCP layer, and the SDAP layer.

It should be understood that, for the protocol stack, functions of the protocol stack may be implemented by pure software, or functions of the protocol stack may be implemented by a combination of software and hardware. For the protocol stack, when the functions of the protocol stack are implemented by pure software, the protocol stack does not rely on dedicated hardware (a dedicated chip, a module, and the like), and an open source protocol stack (OAI, srsRAN, and the like) may be used, or a commercial protocol stack may be used. This is not limited herein.

### Physical layer processing

Both a physical downlink shared channel (physical downlink shared channel, PDSCH) and a physical uplink shared channel (physical uplink shared channel, PUSCH) are physical layer channels. The PDSCH is used for downlink transmission, and the PUSCH is used for uplink transmission. Both the PDSCH and the PUSCH are used to transmit service data and signaling.

Processing of the PHY layer includes physical layer processing of the PDSCH and physical layer processing of the PUSCH. It should be understood that, as described in this embodiment of this application, physical layer processing of the PDSCH or physical layer processing of the PUSCH indicates physical layer processing of the PDSCH or physical layer processing of the PUSCH on data (or service data, signaling, or information). The data (or the service data, the signaling, or the information) is carried in the PDSCH or the PUSCH.

With reference to FIG. 4A and FIG. 4B, the following briefly describes a processing process of a physical layer of the PDSCH and a processing process of a physical layer of the PUSCH.

FIG. 4A is an example block diagram of a processing process of a physical layer of a PDSCH at a transmitting end according to an embodiment of this application. FIG. 4B is an example block diagram of a processing process of a physical layer of a PDSCH at a receiving end according to an embodiment of this application. In other words, the processing process of the physical layer of the PDSCH at the receiving end in FIG. 4B is a reverse process of the processing process of the physical layer of the PDSCH at the transmitting end in FIG. 4A.

In FIG. 4A, the processing process of the physical layer of the PDSCH at the transmitting end includes: cyclic redundancy check (cyclic redundancy check, CRC) insertion, code block segmentation, channel encoding, rate matching, scrambling, modulation, layer mapping, antenna port mapping, and resource block mapping. Correspondingly, in FIG. 4B, the processing process of the physical layer of the PDSCH at the receiving end includes: resource block demapping, antenna port demapping, layer demapping, demodulation, descrambling, de-rate matching, channel decoding, code block combination, and CRC removal.

### CRC insertion and CRC removal

For the transmitting end, CRC is added to each transport block to provide error detection.

For the receiving end, the added CRC is removed from the transport block, to recover the original transport block.

### Code block segmentation and code block combination

For the transmitting end, an internal encryptor defined in an encoder is used only for a code block of a limited size. If a size of a code block of the transport block (including transport block CRC) exceeds a size of a maximum code block, the transport block needs to be segmented, to segment the transport block into smaller code blocks. In addition, after the transport block is segmented into the plurality of code blocks, the CRC is added to each code block.

For the receiving end, based on scheduling information, the code blocks obtained through segmentation may be combined and a decoded transport block may be recovered.

### Channel encoding and channel decoding

For a transmitting end, channel encoding is performed on each code block, to improve reliability of a transmission process. For ease of description, data on which channel encoding is performed is briefly referred to as a code bit block.

For a receiving end, the code bit block is decoded in a same coding scheme, to recover the code block before channel encoding.

### Rate matching and de-rate matching

For a transmitting end, an objective of performing rate matching is to parse a code bit block sent by a signal coder to obtain an accurate to-be-transmitted code bit set in a given transmission time interval (transmission time interval, TTI) or sub-frame. It should be understood that, rate matching is operated on all code bit block sets corresponding to one transport block, rather than separately operated on a code bit corresponding to a single code block.

For a receiving end, de-rate matching is performed on a code block transport block on which rate matching is performed, to recover a code bit block on which rate matching is not performed.

### Scrambling and descrambling

If no scrambling is performed, a signal encoder at a receiving end at least theoretically performs matching and receiving on an interference signal and an expected signal, and therefore, interference cannot be suppressed. Therefore, to effectively suppress interference, at a transmitting end, scrambling is performed on a transport block on which rate matching is performed, and neighboring cells use different scrambling code sequences. In this way, a scrambled interference signal is randomized, to ensure that processing gain provided by channel encoding is fully used. In addition, for example, scrambling is also performed based on an identifier of the receiving end. For ease of description, data on which scrambling is performed is referred to as a scrambled bit block for short.

For the receiving end, descrambling is performed on the scrambled bit block, to recover a code bit block on which rate matching is performed.

### Modulation and demodulation

For a transmitting end, a scrambled bit block is converted into a corresponding complex-valued modulation symbol block, and a modulation scheme such as QPK, 16 QAM, 64 QAM, and 256 QAM may be used. For ease of description, data on which modulation is performed is referred to as a modulation symbol for short.

For a receiving end, demodulation processing is performed on the modulation symbol, to restore the modulation symbol to the scrambled bit block.

### Layer mapping and delayer mapping

For a transmitting end, modulation symbols are mapped to a plurality of layers (for example, four layers or eight layers), to offload data for multi-channel transmission. In 3GPP R10, a maximum quantity of layers at which uplink transmission is performed is four, and a maximum quantity of layers at which downlink transmission is performed is eight. In addition, there is a diversity mode in downlink.

For a receiving end, delayer mapping processing is performed on the data.

### Antenna port mapping and antenna demapping

For a transmitting end, joint processing is performed on a modulation symbol through antenna port mapping, and a result is mapped to a group of antenna ports used for transmission. According to different multi-antenna transmission solutions, antenna port mapping may be configured in different manners, including diversity transmitting, beam forming, and space division multiplexing.

For a receiving end, antenna port mapping processing is performed on data.

### Resource block mapping and resource block demapping

For a transmitting end, a to-be-sent symbol on each antenna port is mapped to an available resource element in a set of resource blocks. Each resource block may include 84 resource elements (seven orthogonal frequency division multiplexing (orthogonal frequency division multiplexing, OFDM) symbols, and 12 sub-carriers on each symbol).

For the receiving end, a symbol carried in each resource element is mapped to each antenna port.

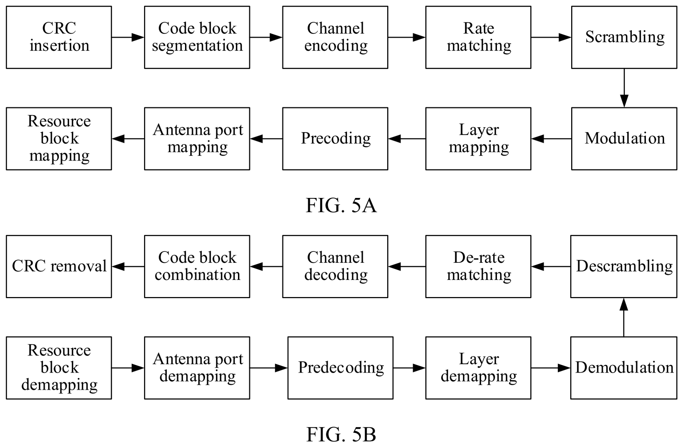

FIG. 5A is an example block diagram of a processing process of a physical layer of a PUSCH at a transmitting end according to an embodiment of this application. FIG. 5B is an example block diagram of a processing process of a physical layer of a PUSCH at a receiving end according to an embodiment of this application. In other words, the processing process of the physical layer of the PUSCH at the receiving end in FIG. 5B is a reverse process of the processing process of the physical layer of the PUSCH at the transmitting end in FIG. 5A.

In FIG. 5A, the processing process of the physical layer of the PUSCH at the transmitting terminal includes: CRC insertion, code block segmentation, channel encoding, rate matching, scrambling, modulation, layer mapping, precoding, antenna port mapping, and resource block mapping. Correspondingly, in FIG. 5B, the processing process of the physical layer of the PUSCH at the receiving end includes: resource block demapping, antenna port demapping, deprecoding, layer demapping, demodulation, descrambling, de-rate matching, channel decoding, code block combination, and CRC removal.

It can be learnt that, a processing process of the physical layer of the PUSCH is approximately the same as a processing process of the physical layer of the PDSCH, and a biggest difference lies in that a precoding process and a deprecoding process are added to the processing process of the physical layer of the PUSCH. This process is optional and is specific to implementation by UE.

The foregoing only briefly describes the processing process of the physical layer of the PDSCH and the processing process of the physical layer of the PUSCH. For detailed descriptions of each process, refer to related descriptions in the related art, and details are not described herein again.

The embodiments of this application are mainly applied to various terminal devices, and therefore, are mainly related to the processing process of the physical layer of the PDSCH and the processing process of the physical layer of the PUSCH that are of the terminal device. For the terminal device, during uplink transmission, the terminal device, serving as a transmitting end, performs each step in a direction of an arrow as shown in FIG. 5A. During downlink transmission, the terminal device, serving as a receiving end, performs each step in a direction of an arrow as shown in FIG. 4B.

In the following, for ease of description, a plurality of processing modules that have different functions and that are of the PDSCH or the PUSCH are defined, and one processing module is configured to perform one step in the processing process of the physical layer of the PDSCH or the PUSCH. For example, a processing module configured to perform channel encoding is defined as a channel encoding module, and a processing module configured to perform channel decoding is defined as a channel decoding module.

### Co-processor

The co-processor (co-processor) is a processor developed and applied to assist a central processing unit in completing processing work that cannot be executed by the central processing unit or has low execution efficiency and a poor effect. There is much work that cannot be executed by the central processing unit, such as signal transmission between devices and management of access devices; and the work that has the low execution efficiency and the poor effect is graphics processing, audio processing, and the like. To perform these processing, the co-processor emerges.

For example, the co-processor may include but is not limited to any one of the following processors: a graphics processing unit (graphics processing unit, GPU), an image signal processor (image signal processor, ISP), a digital signal processor (digital signal processor, DSP), a neural-network processing unit (neural-network processing unit, NPU), and/or a field-programmable gate array (field-programmable gate array, FPGA).

In this embodiment of this application, based on determining of the protocol stack, the co-processor may perform physical layer processing on the data, to improve a processing speed.

A software architecture and a hardware architecture that are applicable to the embodiments of this application are schematically described below.

### Software system of a mobile phone

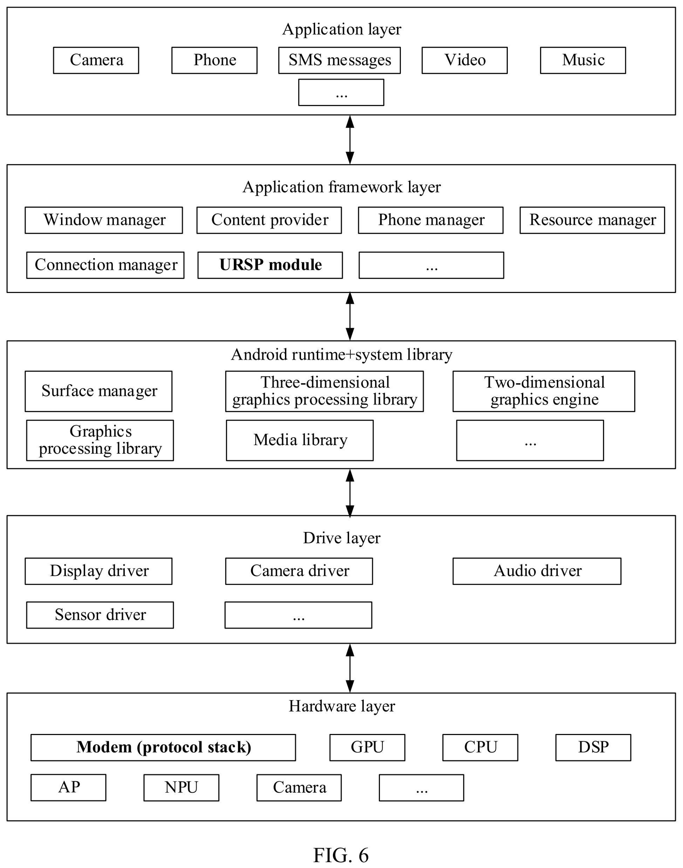

FIG. 6 is an architecture diagram of software and hardware of a terminal device according to an embodiment of this application. It may be understood that, FIG. 6 is an architecture diagram of software and hardware by using an Android system as an example, which is applicable to a device such as a mobile phone, a tablet, or a smart watch. Referring to FIG. 6, in a layered architecture, the software is divided into several layers, each layer has a clear role and task, and the layers communicate with each other through software interfaces. In some embodiments, the Android software system is divided into four layers, which are an application layer, an application framework layer, Android runtime (Android runtime), a system library, and a driver layer separately from top to bottom. A hardware layer is located below the driver layer.

The application layer may include a series of application programs. For example, the application programs may include application programs such as Camera, Phone, Messages, Video, Music, Gallery, Calendar, Map, Navigation, and Bluetooth.

The application framework layer provides an application programming interface (application programming interface, API) and a programming framework for the application programs at the application layer. The application framework layer includes some predefined functions.

For example, the application framework layer may include a window manager, a content provider, a phone manager, a resource manager, a connection manager, a URSP module, and the like.

The window manager is configured to manage a windowing program. The window manager may obtain a size of the display screen, determine whether there is a status bar, perform screen locking, take a screenshot, and the like.

The content provider is configured to: store and obtain data, and enable the data to be accessed by an application program. The data may include a video, an image, an audio, calls that are made and answered, a browsing history and bookmarks, an address book, and the like.

The mobile phone manager is configured to provide a communication function for the electronic device 100, for example, management of a call status (including answering, declining, or the like).

The resource manager provides various resources for an application program, for example, a localized character string, an icon, a picture, a layout file, and a video file.

The connection manager is configured to provide a function related to a network change. For example, the connection manager may be configured to monitor a network connection (Wi-Fi, GPRS, UMTS, and the like), configured to send a broadcast attempt when a network connection changes, configured to attempt to switch to another network when a network connection fails, and configured to provide an application interface that allows an application program to query an available network in a coarse-grained or fine-grained state.

The URSP module is configured to determine, according to a URSP rule and based on a service, a network slice corresponding to the service, is further configured to receive, update, and delete the URSP rule, is configured to map a data interface of the application layer to a corresponding service interface, forward uplink service data from the application layer to a protocol stack, and forward downlink service data from the protocol stack to the application layer. For example, the URSP module is further configured to store the URSP rule.

The Android runtime includes a core library and a virtual machine. The Android runtime is responsible for scheduling and managing an Android system.

The core library includes two parts: a function function that needs to be invoked in Java language and a core library of Android.

The application layer and the application framework layer are run in a virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem, and converge 2D and 3D layers of a plurality of application programs.

The media library supports playback and recording in a plurality of commonly used audio and video formats, and static image files. The media library may support a plurality of audio and video encoding formats, for example, MPEG4, H.264, MP3, AAC, AMR, JPG, and PNG.

The three-dimensional graphics processing library is configured to implement three-dimensional drawing, image rendering, compositing, and layer processing.

The 2D graphics engine is a drawing engine for 2D drawing.

The driver layer is a layer between hardware and software. For example, the driver layer may include a display driver, a camera driver, an audio driver, a sensor driver, and the like.

The hardware layer serves as a module at a bottom layer in a device, and includes various types of devices such as a processor and a camera. The processor may include various processors such as a modem (modem), a GPU, a central processing unit (central processing unit, CPU), an application processor (application processor, AP), an ISP, a video codec, a DSP, a baseband processor, an FPGA, and/or an NPU.

The modem is configured with a protocol stack. The protocol stack is used to initiate a PDU session based on the network slice, determine, based on the network slice, whether to perform physical layer processing on data by using the co-processor (for example, the GPU), and when determining that the co-processor needs to be used to perform physical layer processing on data, select at least one processing module of the physical layer based on the network slice, to perform processing on the data by using the GPU and through the at least one processing module, so as to implement physical layer acceleration and increase a processing speed.

In this embodiment of this application, as described above, the foregoing processors such as the GPU, the ISP, the DSP, the NPU, and/or the FPGA may be collectively referred to as the co-processor. Based on determining of the protocol stack, the co-processor may perform physical layer processing on the data, to improve the processing speed.

It should be understood that, the architecture diagram of software and the architecture diagram of hardware that are shown in FIG. 6 are only schematic descriptions and should not constitute a limitation to the embodiments of this application.

For example, in some embodiments, the URSP module may be configured in the modem, and a function of the URSP module is implemented in the modem. In other words, both the URSP module and the protocol stack are integrated in the modem. However, in an embodiment in which the URSP module is configured in the modem, because software and hardware are combined, when a function of the URSP module is implemented, modification of related content of the modem is related to. This increases admission difficulty of participating, by a developer, in emulation of a network slice technology of a 5G terminal. In addition, implementing the URSP function based on the modem lacks flexibility.

As a preferred manner, as shown in FIG. 6, the URSP module is removed from the modem used as hardware, and is configured at the application framework layer to implement the URSP function, which does not relate to modification of the content of the modem, so that the admission difficulty of participating, by the developer, in emulation of the network slice technology of the 5G terminal can be reduced, and flexibility of implementing the URSP function can be improved.

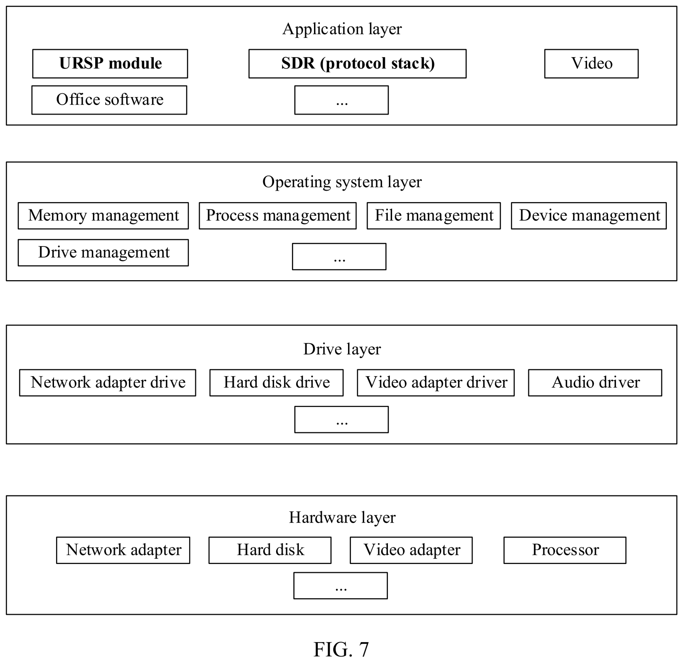

FIG. 7 is an architecture diagram of another software and hardware of a terminal device according to an embodiment of this application. It may be understood that, the software architecture above the hardware layer shown in FIG. 7 is more applicable to computer devices such as a notebook computer and a personal computer. Referring to FIG. 7, the software architecture may include, from top to bottom, an application layer, an operating system layer, and a driver layer. A hardware layer is located below the driver layer.

The application layer may include, for example, an application program such as a URSP module, a software definition radio (software definition radio, SDR) module, a video, office software, music, and a video.

The SDR is a radio broadcast communication technology, and is implemented based on a software-defined wireless communication protocol rather than through a hard connection. In other words, a frequency band, an air interface protocol, and a function may be upgraded by downloading and updating software, and hardware does not need to be completely replaced. The SDR provides an effective and secure solution for a problem of constructing a multi-mode, multi-frequency, and multifunction wireless communication device.

Different from a case in which the modem in FIG. 6 is configured with the protocol stack, in the software architecture shown in FIG. 7, the SDR is configured with the protocol stack. For detailed descriptions of the protocol stack, refer to the foregoing related descriptions, and details are not described again.

Different from a case in which the URSP module in FIG. 6 is configured at the application framework layer, in the software architecture shown in FIG. 7, the URSP module is set at the application layer. For detailed descriptions of the URSP module, refer to the foregoing related descriptions, and details are not described again.

It may be understood that, in the software architecture shown in FIG. 7, both the URSP module and the SDR may be installed on a device such as a computer as application programs, and the technical solution of this application is implemented by running the application programs of the URSP module and the SDR.

It should be further understood that, the URSP module may be used as an independent instance procedure (as shown in FIG. 7) of a software framework, or may be integrated into the SDR. In this way, both the protocol stack and the URSP module are integrated into the SDR.

The operating system layer is an intermediate bridge connecting hardware and software, and includes machine instructions and generalized instructions. The machine instructions refer to instructions that can be directly recognized and executed by a CPU, and the generalized instructions refer to software instructions defined and explained by a system. For example, the operating system layer includes: a content management module, a procedure management module, a file management module, a device management module, a driver management module, and the like.

The memory management module is mainly configured to manage an internal memory, and a main task is: allocating a memory space, to ensure that storage spaces occupied by tasks do not conflict with each other, and make the tasks not interfere with each other in storage areas to which the tasks belong.

Essence of the procedure management module is to manage a central processing unit, and therefore, the procedure management module is usually also referred to as a processor management module. The procedure management module may be configured to manage content in several aspects such as procedure control, procedure synchronization, inter-procedure communication, and procedure scheduling. Procedure control mainly processes things such as creation state transformation of a procedure, procedure cancellation, and allocation and recycling of related procedure resources. Procedure synchronization mainly deals with a relationship between inheritance, including synchronization and mutual exclusion of procedures. Inter-procedure communication mainly deals with a problem of information exchange between procedures that cooperate with each other. Procedure scheduling refers to selecting, based on a specific algorithm, a procedure from a ready queue to actually execute the procedure in a processor.

The file management module is configured to manage various hardware resources, such as a USB flash drive, a web disk, and a keyboard.

The device management module is mainly configured to be responsible for managing various types of peripherals (which are briefly referred to as peripherals), including allocation, startup, fault processing, and the like. A main task is: When a user uses a peripheral, a requirement needs to be put up, and the peripheral can be used after an operating system performs uniform allocation. When a program of the user runs to a case in which a peripheral needs to be used, the operating system is responsible for driving the peripheral.

The driver management module is configured to provide a connection between a program and hardware, and provide services and interfaces of various systems.

The driver layer is a layer between hardware and software. For example, the driver layer may include a network adapter driver, a hard disk driver, a video adapter driver, and an audio driver.

The hardware layer serves as a module at a bottom layer in the device, and for example, may include a network adapter, a hard disk, a video card, and various types of processors. For example, the processor may include various processors such as a GPU, a CPU, an AP, an ISP, a video codec, a DSP, and an NPU.

It should be understood that, the architecture diagram of software and the architecture diagram of hardware that are shown in FIG. 7 are only schematic descriptions and should not constitute a limitation to the embodiments of this application.

For example, in some embodiments, the URSP module may be configured at an operating system layer, and a function of the URSP module is implemented at the operating system layer. However, in an embodiment in which the URSP module is configured at the operating system layer, when a function of the URSP module is implemented, modification of related content of the operating system layer is related to. This increases admission difficulty of participating, by a developer, in emulation of a network slice technology of a 5G terminal. In addition, implementing the URSP function based on the operating system layer lacks flexibility.

As a preferred manner, as shown in FIG. 7, the URSP module is removed from the operating system layer, and is configured at the application layer to implement the URSP function, which does not relate to modification of the content of the operating system layer, so that the admission difficulty of participating, by the developer, in emulation of the network slice technology of the 5G terminal can be reduced, and flexibility of implementing the URSP function can be improved.

It should be understood that, the architecture diagram of software and the architecture diagram of hardware that are shown in FIG. 6 and FIG. 7 are only schematic descriptions and should not constitute a limitation to the embodiments of this application. In another embodiment, a software architecture in the software architecture and a software architecture in the hardware architecture may also exist in another form, including more or fewer modules, but including at least functional modules such as an application layer, a URSP module, and a protocol stack.

Based on a problem in the related art of how to better satisfy requirements of different network slice scenarios on real-time performance, an embodiment of this application provides a method based on network slice communication. Whether a co-processor needs to be used to perform physical layer processing on data is determined based on a network slice corresponding to a service. When it is determined that the co-processor needs to be used to perform physical layer processing on the data, at least one processing module of the physical layer is determined based on the network slice, and the data is processed by using the co-processor and through the at least one processing module. Compared with performing physical layer processing on the data by using a CPU, processing the data by using the co-processor can significantly improve a processing speed and improve real-time performance. In addition, the processing module of the physical layer that is processed by using the co-processor is determined based on the network slice, so that different processing modules that are processed by using the co-processor can be determined based on different network slices. In this way, a case in which resource and power are wasted due to non-differential scheduling of calculation resources by using the co-processor in different network slice scenarios can be avoided, requirements of different application scenarios on real-time performance can be matched, and flexibility of a processing process can also be improved. In this embodiment of this application, network slice-based adaptive acceleration is generally implemented, and the requirements of the different application scenarios on the real-time performance are satisfied.

It should be noted that, "data" described in this embodiment of this application is data in a broad sense, and represents any content transmitted through bits, including service data and signaling. The service data may also be understood as application data, for example, data associated with an actual service, such as video data and audio data. The signaling may be some information used for service data transmission, for example, information such as a PDU session establishment request sent by the terminal and a PDU session establishment response received by the terminal during establishment of a PDU session.

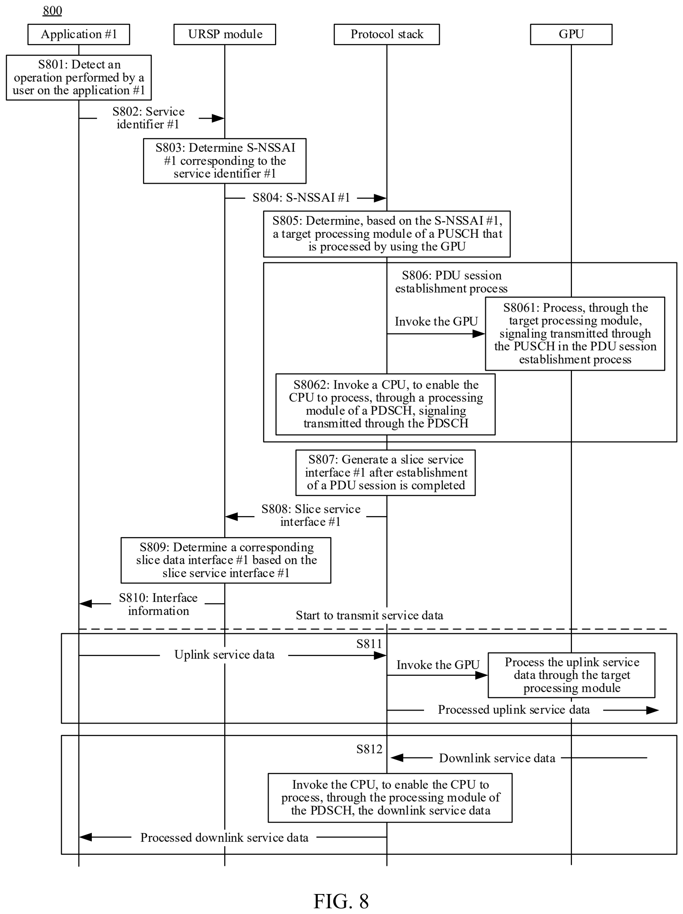

The following describes this embodiment of this application in detail through interaction between modules in the terminal device with reference to FIG. 8 to FIG. 10. An example in which the GPU is used as the co-processor is used. Through mutual interaction among an application at an application layer, a URSP module, a protocol stack, a GPU, and a CPU (not shown in the figure), physical layer processing is performed on data by using the GPU, to implement physical layer acceleration, improve a processing speed, and satisfy a requirement of a current network slice scenario on real-time performance.

It should be understood that, the URSP module and the protocol stack may be applicable to FIG. 6 and FIG. 7 and another software architecture in any form. This is not limited in this embodiment of this application.

FIG. 8 is an example flowchart of a method 800 based on network slice communication according to an embodiment of this application. In the method 800, a terminal device determines, based on S-NSSAI used to identify a network slice, a target processing module of a PUSCH that is processed by using a GPU, and the GPU processes data (service data and signaling) through the target processing module, to implement physical layer acceleration, improve a processing speed, and satisfy a requirement of a current network slice scenario on real-time performance.

It should be understood that, in the method 800, for the data (the service data and the signaling) transmitted through a PDSCH, physical layer processing is performed on the data by using a CPU in a manner in the related art.

Step 801: An application #1 detects an operation performed by a user on the application #1.

For example, the user opens an application #1, and the application #1 can detect the operation of opening the application #1 that is performed by the user.

The application #1 may be a client application, or may be a browser application. This is not limited. For example, the application #1 may be an application such as an application of a video live streaming type (for example, Kuaishou^{®} and Douyin^{®}), a real-time and high-definition monitor application, or a high-definition industrial video backhaul application that has a relatively high requirement on real-time performance of uplink transmission, and needs to transmit a large amount of uplink data to a network. For another example, the application #1 may also be a browser application such as a 360 secure browser^{®}.

Step 802: The application #1 sends a service identifier #1 to a URSP module.

Correspondingly, the URSP module receives the service identifier #1.

After detecting the operation performed by the user, the application #1 generates the service identifier #1 based on a service executed by the application #1, and sends the service identifier #1 to the URSP module.

It may be understood that, the service identifier #1 is used to identify the service (denoted as a service #1) executed by the application #1. For example, the service #1 is a live streaming service, and the service identifier #1 is used to identify the live streaming service.

For example, the service identifier may be represented by at least one of an application identification (application identification, APP ID), internet protocol (internet protocol, IP) triple information, a fully qualified domain name (fully qualified domain name, FQDN), and a DNN. The IP triple information includes: a source IP address, a target IP address, and an upper-layer protocol type. Specifically, the source IP address is an IP address of a PDU session corresponding to UE, the target IP address is an IP address of a server that stores service data of a target service, and the upper-layer protocol type is a transmission control protocol (transmission control protocol, TCP) or a user datagram protocol (user datagram protocol, UDP). For example, for the client application, the APP ID or the FQDN may be used as the service identifier. For another example, for the browser application, the FQDN may be used as the service identifier.

Step 803: After receiving the service identifier #1, the URSP module determines S-NSSAI #1 corresponding to the service identifier #1.

The URSP module stores correspondences (denoted as correspondences #1) between a plurality of service identifiers and a plurality of pieces of S-NSSAI. At least one service identifier corresponds to one piece of S-NSSAI, one piece of S-NSSAI is used to uniquely identify one network slice, and one service identifier is used to uniquely identify one service. The URSP module receives the service identifier #1, and determines S-NSSAI (denoted as S-NSSAI #1) corresponding to the service identifier #1 from the correspondences #1 between the plurality of service identifiers and the plurality of pieces of S-NSSAI. The S-NSSAI #1 is used to indicate a network slice #1. That is, the URSP module determines a network slice #1 corresponding to a service identified by the service identifier #1.

During implementation, the URSP module may include a database unit, a URSP unit, and a routing unit. The database unit stores the correspondences #1 between the plurality of service identifiers and the plurality of pieces of S-NSSAI. The URSP unit is configured to determine, based on a service identifier, corresponding S-NSSAI from the correspondence #1 stored in the database unit. For the service identifier #1, the URSP unit is configured to determine, based on the service identifier #1, the S-NSSAI corresponding to the service identifier #1 from the correspondences #1 stored in the database unit. The routing unit is configured to map a data interface of an application layer to a service interface (for details, refer to descriptions of step S809).

Step S804: The URSP module sends the S-NSSAI #1 to a protocol stack.

Correspondingly, the protocol stack receives the S-NSSAI #1.

Step S805: The protocol stack determines, based on the S-NSSAI #1, the target processing module of the PUSCH that is processed by using the GPU.

After receiving the S-NSSAI #1, the protocol stack determines, based on the S-NSSAI #1, that the GPU needs to be used to process the PUSCH, and determines, in a plurality of processing modules of the PUSCH, the target processing module that is processed by using the GPU, to enable the GPU to process, through the target processing module, data (service data and signaling) transmitted through the PUSCH, so as to improve a processing speed. It should be understood that, the plurality of processing modules of the PUSCH are all processing modules of the PUSCH. A higher layer protocol stack in the protocol stack may perform this step.

As described above, a processing module of the PUSCH (or the PDSCH) is configured to perform a step in a processing process of a physical layer of the PUSCH (or the PDSCH). Referring to FIG. 5A, the plurality of processing modules of the PUSCH of the terminal device include: a CRC insertion module, a code block segmentation module, a channel encoding module, a rate matching module, a scrambling module, a modulation module, a layer mapping module, a precoding module, an antenna port mapping module, and a resource block mapping module.

The target module unit of the PUSCH includes at least one processing module, which may be some processing modules in the plurality of processing modules of the PUSCH, or may be all the processing modules in the plurality of processing modules, and is specifically related to the network slice #1 identified based on the S-NSSAI #1.

For example, if a service #1 corresponding to the network slice #1 is a service such as a high-definition and real-time data backhaul service, a live streaming service, or a high-definition and real-time monitoring service, the target processing module determined based on the S-NSSAI #1 used to identify the network slice #1 may be all the processing modules of the PUSCH. For another example, if the service #1 corresponding to the network slice #1 is a service such as a non-high-definition data backhaul service or a non-high-definition and real-time monitoring service, the target processing module determined based on the S-NSSAI #1 used to identify the network slice #1 may be some processing modules of the PUSCH.

For example, the protocol stack stores correspondences (denoted as correspondences #2). The correspondences #2 include an uplink correspondence and a downlink correspondence. Both the uplink correspondence and the downlink correspondence are used to indicate correspondences between the plurality of pieces of S-NSSAI and a plurality of groups of processing modules. One piece of S-NSSAI corresponds to one group of processing modules. Each group of processing modules include at least one processing module. Processing modules in each group of processing modules are not completely the same.

During implementation, the protocol stack matches the S-NSSAI #1 with the foregoing correspondences #2 (the uplink correspondence and the downlink correspondence), and finally selects, through matching, a group of processing modules corresponding to the S-NSSAI #1 from the uplink correspondence. The group of processing modules are target processing modules that correspond to the S-NSSAI #1 and that are of the PUSCH processed by using the GPU.

Table 1 shows the uplink correspondence shown in this embodiment of this application. A first column represents S-NSSAI, and a second column represents a group of processing modules corresponding to specific S-NSSAI. For example, a group of processing modules corresponding to S-NSSAI #A include: the channel encoding module, the rate matching module, and the scrambling module. A group of processing modules corresponding to S-NSSAI #B include a channel encoding module. A group of processing modules corresponding to S-NSSAI #C are all the processing modules of the PUSCH. A group of processing modules corresponding to S-NSSAI #D include: the channel encoding module and the modulation module. The S-NSSAI #1 may be any piece of S-NSSAI in Table 1.

Table 2 shows the downlink correspondence shown in this embodiment of this application. For detailed descriptions, refer to the descriptions in Table 1, and details are not described again.

It should be noted that, the same S-NSSAI not only may correspond to a group of processing modules of the PUSCH, but also may correspond to a group of processing modules of the PDSCH. In other words, physical layer processing of the PUSCH and physical layer processing of the PDSCH need to be performed on data by using the GPU under a network slice identified based on the S-NSSAI, to implement physical layer acceleration of the PUSCH and the PDSCH. The S-NSSAI #A shown in Table 1 and Table 2 not only corresponds to the channel encoding module, the rate matching module, and the scrambling module of the PUSCH, but also corresponds to the channel decoding module and the de-rate matching module of the PDSCH.

Alternatively, one piece of S-NSSAI may correspond only to one group of processing modules of the PUSCH. In other words, physical layer processing of the PUSCH needs to be performed only on data by using the GPU under a network slice identified based on the S-NSSAI. The S-NSSAI #B shown in Table 1 corresponds only to the channel encoding module of the PUSCH.

Alternatively, one piece of S-NSSAI may correspond only to one group of processing modules of the PDSCH. In other words, physical layer processing of the PDSCH needs to be performed only on data by using the GPU under a network slice identified based on the S-NSSAI.

It should be understood that, the uplink correspondence shown in Table 1 and the downlink correspondence shown in Table 2 are only schematic descriptions and should not constitute a limitation to the embodiments of this application.

**Table 1 Uplink correspondence**

| S-NSSAI | Processing module |
|---|---|
| S-NSSAI #A | Channel encoding module, rate matching module, and scrambling module |
| S-NSSAI #B | Channel encoding module |
| S-NSSAI #C | CRC insertion module, code block segmentation module, channel encoding module, rate matching module, scrambling module, modulation module, layer mapping module, precoding module, antenna port mapping module, and resource block mapping module |
| S-NSSAI #D | Channel encoding module and modulation module |
| ... | ... |

**Table 2 Downlink correspondence**

| S-NSSAI | Processing module |
|---|---|
| S-NSSAI #A | Channel decoding module and de-rate matching module |
| S-NSSAI #C | CRC removal module, code block combination module, channel decoding module, de-rate matching module, descrambling module, demodulation module, layer demapping module, antenna port demapping module, and resource block demapping module |
| S-NSSAI #D | Channel decoding module and demodulation module |
| ... | ... |

Step S806: The protocol stack initiates a PDU session based on the S-NSSAI #1, to perform a PDU session establishment process.

In other words, the protocol stack initiates a PDU session based on of the network slice #1 identified based on the S-NSSAI #1, and completes establishment of the PDU session through interaction between an access network device and a core network device.

In a process of establishing the PDU session, with reference to FIG. 2, in step S201, a protocol stack of the terminal device generates a PDU session establishment request, sends, after performing processing on the PDU session establishment request based on a physical layer, the PDU session establishment request to an AMF by using a transceiver in the terminal device and through the access network device, to start establishment of the PDU session, and further completes establishment of the PDU session through interaction among network elements of the terminal device, the access network device, and the core network device. The PDU session establishment request includes the S-NSSAI #1 that is received by the protocol stack and that is determined and sent by the URSP module. For detailed descriptions of the PDU session establishment process, refer to the related descriptions of FIG. 2, and details are not described again.

In the PDU session establishment process, for signaling transmitted through the PUSCH, the GPU may be used to process the signaling through the target processing module, and for the signaling transmitted through the PDSCH, the CPU may be used to process the signaling through the processing module of the PDSCH. The following specifically describes, through step S8061 and step S8062, a process of processing the signaling transmitted through the PUSCH and the PDSCH.

Step S8061: The protocol stack invokes the GPU, and the GPU processes, through the target processing module, the signaling transmitted through the PUSCH in the PDU session establishment process.

With reference to FIG. 2, for example, the signaling transmitted through the PUSCH in the PDU session establishment process may include: the PDU session establishment request (PDU session establishment request) in step S201, and related information of establishing a resource connection between the terminal device (for example, the UE) and the access network device (for example, a gNB) in step S2083. Certainly, in the PDU session establishment process, the signaling transmitted through the PUSCH may further include other signaling that is not shown in FIG. 2. For details, refer to a more specific PDU session establishment process in the related art.

For the signaling transmitted through the PUSCH in the PDU session establishment process, after the signaling is processed (SDAP layer processing, PDCP layer processing, RLC layer processing, and MAC layer processing are sequentially performed on the signaling) by the higher layer protocol stack of the protocol stack, the GPU may be invoked through the higher layer protocol stack or the physical layer. This is not limited in this embodiment of this application. In addition, after the GPU (or the GPU and the CPU) performs complete physical layer processing on the signaling, the CPU obtains a final processing result (namely, the signaling obtained after complete physical layer processing is performed), and finally, the CPU controls the transceiver to send the processed signaling.

When the target processing module includes all the processing modules of the PUSCH, the protocol stack invokes the GPU, and after processing the signaling through the target processing module, the GPU feeds back a final processing result (the signaling obtained after complete physical layer processing is performed) to the CPU, so that the CPU controls the transceiver to send the processed signaling. In this case, the GPU performs complete physical layer processing on the signaling, and the GPU obtains the signaling, namely, the final processing result, that is obtained after physical layer processing is completed, and feeds back the final processing result to the CPU.

When the target processing module includes some processing modules of the PUSCH, the protocol stack invokes the GPU, and the GPU processes the signaling through the target processing module. For other processing modules other than the target processing module in the PUSCH, the protocol stack invokes the CPU (not shown in the figure). The CPU processes the signaling through the other processing modules. The CPU obtains the final processing result (the signaling obtained after complete physical layer processing is performed). Finally, the CPU controls the transceiver to send the processed signaling. In this case, the GPU performs one part of physical layer processing on the signaling, and the CPU performs the other part of physical layer processing on the signaling. Therefore, the CPU and the GPU jointly perform complete physical layer processing on the signaling.

If processing procedures of some processing modules of the PUSCH that are included in the target processing module are non-continuous, for example, a previous processing module is processed by using the GPU, a next processing module is processed by the CPU, and a next processing module is processed by using the GPU. The GPU and the CPU feed back a processing result of a current processing module to each other, to enable the GPU or the CPU to perform processing of the next processing module based on the processing result that is fed back. For example, the target processing module processed by using the GPU includes the channel encoding module, the rate matching module, and the scrambling module. Then, the CPU processes remaining processing modules. The CPU first processes the signaling through the CRC insertion module and the code block segmentation module, and feeds back an obtained processing result #1 to the GPU. The GPU continues to process the signaling through the channel encoding module, the rate matching module, and the scrambling module based on the processing result #1, and feeds back an obtained processing result #2 to the CPU. The CPU continues to process the signaling through the remaining processing modules based on the processing result #2, to obtain a final processing result.

During implementation, for example, the GPU is configured with interfaces of various processing modules of the PUSCH and the PDSCH. After determining the target processing module of the PUSCH, the protocol stack invokes an interface of each processing module in the target processing module, so that the GPU can be run. In this way, the GPU is invoked by invoking the interface of each processing module configured in the GPU, and signaling transmitted through the PUSCH is processed through the target processing module.

Step S8062: The protocol stack invokes the CPU, to enable the CPU to process, through the processing module of the PDSCH, the signaling transmitted through the PDSCH.

With reference to FIG. 2, for example, the signaling transmitted through the PDSCH in the PDU session establishment process may include: a PDU session establishment response (PDU Session Establishment Accept) and AN specific resource setup in step S2082, and related information of establishing a resource connection between the terminal device (for example, the UE) and the access network device (for example, a gNB) in step S2083. Certainly, in the PDU session establishment process, the signaling transmitted through the PDSCH may further include other signaling that is not shown in FIG. 2. For details, refer to a more specific PDU session establishment process in the related art.

During implementation, the protocol stack receives, by using the transceiver, the signaling transmitted through the PDSCH. The protocol stack invokes the CPU, and the CPU performs, through the processing module of the PDSCH, physical layer processing on the signaling transmitted through the PDSCH, and performs processing performed on the higher layer protocol stack on the processed signaling (sequentially performs MAC layer processing, RLC layer processing, PDCP layer processing, and SDAP layer processing).

It should be understood that, in the process in which the CPU processes the signaling through the processing module of the PDSCH, referring to FIG. 4B, the CPU sequentially processes the signaling through the resource block demapping module, the antenna port demapping module, the layer demapping module, the demodulation module, the descrambling module, the de-rate matching module, the channel decoding module, the code block combination module, and the CRC removal module.

Step S807: The protocol stack generates a slice service interface #1 after establishment of the PDU session is completed.

It should be noted that, in the PDU session establishment process, after the terminal device receives the PDU session establishment response (PDU Session Establishment Accept) in step S2082, although there are various signaling interactions between network sides, for the terminal device, after receiving the PDU session establishment response, it may be considered that establishment of the PDU session is completed, and actually, the foregoing service data may be transmitted subsequently.

It should be understood that, the slice service interface #1 corresponds to the S-NSSAI #1, or the slice service interface #1 corresponds to the network slice #1 identified based on the S-NSSAI #1, or the slice service interface #1 is generated based on the S-NSSAI #1. It should be further understood that, after the slice service interface #1 is generated, it means that a slice channel of the network slice is established, but the service data cannot be transmitted through the slice channel. The slice service interface #1 needs to be associated with a slice data interface #1 of the application layer (for details, refer to the descriptions of step S809), so that the service data transmitted through the slice data interface #1 can be transmitted through a slice channel of the corresponding slice service interface #1.

Step S808: The protocol stack sends the slice service interface #1 to the URSP module.

Correspondingly, the URSP module receives the slice service interface #1.

Step S809: The URSP module determines the corresponding slice data interface #1 based on the slice service interface #1.

The URSP module stores correspondences (denoted as correspondences #3) between a plurality of slice service interfaces and a plurality of slice data interfaces. After receiving the slice service interface #1, the URSP module determines, based on the correspondences #3, the slice data interface #1 corresponding to the slice service interface #1.

During implementation, for example, the routing unit of the URSP module may determine, based on the correspondences # 3, the slice data interface #1 corresponding to the slice service interface #1. The correspondences # 3 may be stored in the database unit.

It should be understood that, the slice data interface is an interface of the application layer.

Step S810: The URSP module sends interface information to the application #1, where the interface information is used to indicate the slice data interface #1.

Correspondingly, the application #1 receives the interface information.

Then, the application #1 starts to transmit the service data, where the service data includes uplink service data and downlink service data. Specifically, the application #1 transmits the service data through the slice data interface #1 indicated by the interface information.

It should be understood that, the uplink service data is service data transmitted through the PUSCH, and the downlink service data is service data transmitted through the PDSCH.

Step S811: The protocol stack receives uplink service data from an application layer #1, the protocol stack invokes the GPU, the GPU processes the uplink service data through the target processing module, the CPU obtains a final processing result (namely, uplink service data obtained after complete physical layer processing is performed), and finally, the CPU controls the transceiver to send the processed uplink service data.

During implementation, after the protocol stack receives the uplink service data, and after the higher layer protocol stack of the protocol stack processes the uplink service data (sequentially performs SDAP layer processing, PDCP layer processing, RLC layer processing, and MAC layer processing), the GPU may be invoked through the higher layer protocol stack or the physical layer, to enable the GPU to perform physical layer processing on the processed uplink service data. This is not limited in this embodiment of this application. In addition, after the GPU (or the GPU and the CPU) performs complete physical layer processing on the uplink service data, the CPU obtains a final processing result (namely, the uplink service data obtained after complete physical layer processing is performed), and finally, the CPU controls the transceiver to send the processed uplink service data.

Because in step S805, the protocol stack has determined the target processing module of the PUSCH that is processed by using the GPU, for the uplink service data, the protocol stack may directly invoke the GPU, to enable the GPU to process the uplink service data through the target processing module.

When the target processing module includes all the processing modules of the PUSCH, the protocol stack invokes the GPU, and after processing the uplink service data through the target processing module, the GPU feeds back a final processing result (the uplink service data obtained after complete physical layer processing is performed) to the CPU, so that the CPU controls the transceiver to send the processed uplink service data. In this case, the GPU performs complete physical layer processing on the uplink service data, and the GPU obtains the uplink service data, namely, the final processing result, that is obtained after physical layer processing is completed, and feeds back the final processing result to the CPU.

When the target processing module includes some processing modules of the PUSCH, the protocol stack invokes the GPU, and the GPU processes the uplink service data through the target processing module. For other processing modules other than the target processing module in the PUSCH, the protocol stack invokes the CPU (not shown in the figure). The CPU processes the uplink service data through the other processing modules. The CPU obtains the final processing result (the uplink service data obtained after complete physical layer processing is performed). Finally, the CPU controls the transceiver to send the processed uplink service data. In this case, the GPU performs one part of physical layer processing on the uplink service data, and the CPU performs the other part of physical layer processing on the uplink service data. Therefore, the CPU and the GPU jointly perform complete physical layer processing on the uplink service data.

If processing procedures of some processing modules of the PUSCH that are included in the target processing module are non-continuous, the GPU and the CPU feed back a processing result of a current processing module to each other, to enable the GPU or the CPU to perform processing of the next processing module based on the processing result that is fed back. For example, the target processing module processed by using the GPU includes the channel encoding module, the rate matching module, and the scrambling module. Then, the CPU processes remaining processing modules. The CPU first processes the uplink service data through the CRC insertion module and the code block segmentation module, and feeds back an obtained processing result #1 to the GPU. The GPU continues to process the uplink service data through the channel encoding module, the rate matching module, and the scrambling module based on the processing result #1, and feeds back an obtained processing result #2 to the CPU. The CPU continues to process the uplink service data through the remaining processing modules based on the processing result #2, to obtain a final processing result.

It should be understood that, the application #1 sends the uplink service data to the URSP module through the slice data interface #1, and the URSP module forwards the uplink service data to the protocol stack through the slice service interface #1 corresponding to the slice data interface #1, so that the protocol stack transmits the uplink service data through the slice channel of the slice service interface #1.

Step S812: The protocol stack receives the downlink service data by using the transceiver, the protocol stack invokes the CPU, to enable the CPU to process the downlink service data through the processing module of the PDSCH, and after the protocol stack completely processes the downlink service data, the protocol stack sends the processed downlink service data to the application #1 through the URSP module.

During implementation, after completing physical layer processing on the downlink service data through the processing module of the PDSCH, the CPU performs processing performed on the higher layer protocol stack on the processed downlink service data (that is, sequentially performs MAC layer processing, RLC layer processing, PDCP layer processing, and SDAP layer processing). It may be understood that, after the higher layer protocol stack completes processing on the downlink service data, it may be considered that the protocol stack completes complete processing on the downlink service data. After the protocol stack completes complete processing on the downlink service data, the protocol stack sends the processed downlink service data to the application #1 through the URSP module.

In addition, in the process in which the protocol stack sends the processed downlink service data to the application #1 through the URSP module, the protocol stack sends the downlink service data to the URSP module through the slice service interface #1, and the URSP module forwards the downlink service data to the application #1 through the slice data interface #1 corresponding to the slice service interface #1.

For detailed descriptions of the process in which the CPU processes the downlink service data through the processing module of the PDSCH, refer to related descriptions of the process in which the CPU processes the signaling through the processing module of the PDSCH described above, and details are not described again.

It should be understood that, a sequence of step S811 and step S812 is not subject to a size of a label, and a sequence of transmission of the uplink service data and the downlink service data is subject to a specific service. For example, step S811 may also be performed after step S812.

In the foregoing embodiment, the terminal device determines, based on the service identifier #1, the network slice #1 corresponding to the service identifier #1, and determines, based on the network slice #1, the target processing module of the PUSCH that is processed by using the GPU. In this way, the GPU may be used to perform, through the target processing module, physical layer processing on the data (the service data and the signaling) transmitted through the PUSCH. Compared with performing physical layer processing on the data by using the CPU, performing physical layer processing on the data by using the GPU can significantly improve a processing speed, and improve real-time performance in a scenario in which the network slice #1 corresponds to the service identifier #1.

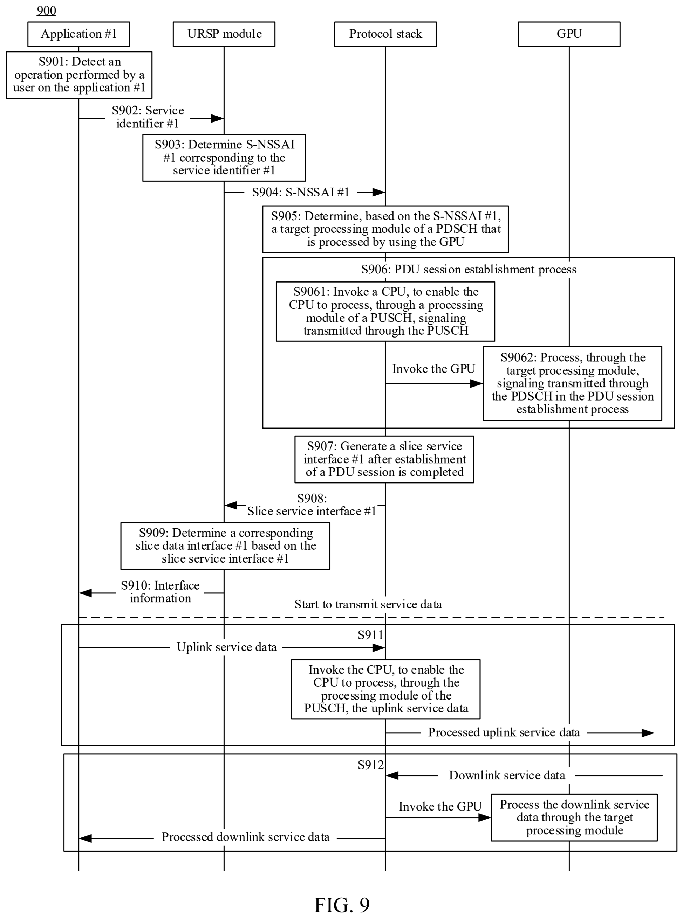

FIG. 9 is an example flowchart of a method 900 based on network slice communication according to an embodiment of this application. In the method 900, a terminal device determines, based on S-NSSAI used to identify a network slice, a target processing module of a PDSCH that is processed by using a GPU, and the GPU processes data (service data and signaling) through the target processing module, to implement physical layer acceleration, improve a processing speed, and satisfy a requirement of a current network slice scenario on real-time performance.

It should be understood that, in the method 900, for the data (the service data and the signaling) transmitted through a PUSCH, physical layer processing is performed on the data by using a CPU in a manner in the related art.

For detailed descriptions of step S901 and step S904, refer to related descriptions of step S801 and step S804 in the method 800. Details are not described herein again. The only difference lies in that a service identifier #1 and S-NSSAI #1 in the method 900 are not completely the same as an application #1, a service identifier #1, and S-NSSAI #1 in the method 800.

It may be understood that, a service #1 identified by the service identifier #1 and a network slice #1 identified based on the S-NSSAI #1 in the method 900 are applicable to a scenario having a relatively high requirement on real-time performance of the PDSCH. For example, the application #1 may be a video application (for example, an application such as Tencent video^{®} that can be used to watch a long video) or an audio application (for example, Netease music^{®}). The service #1 is a video service or an audio service, the service identifier #1 used to identify the service #1 is used to identify the video service or the audio service, and the corresponding network slice #1 is applicable to the video service or the audio service.

Step S905: The protocol stack determines, based on the S-NSSAI #1, the target processing module of the PDSCH that is processed by using the GPU.

After receiving the S-NSSAI #1, the protocol stack determines, based on the S-NSSAI #1, that the GPU needs to be used to process the PDSCH, and determines, in a plurality of processing modules of the PDSCH, the target processing module that is processed by using the GPU, to enable the GPU to process data (service data and signaling) transmitted through the PDSCH, so as to improve a processing speed. It should be understood that, the plurality of processing modules of the PDSCH are all processing modules of the PDSCH. For the terminal device, refer to the processing module shown in FIG. 4B.

The target processing module unit of the PDSCH includes at least one processing module, which may be some processing modules in the plurality of processing modules of the PDSCH, or may be all the processing modules in the plurality of processing modules, and is specifically related to the network slice #1 identified based on the S-NSSAI #1.

For example, if a service #1 corresponding to the network slice #1 is a high-definition video live streaming service, the target processing module determined based on the S-NSSAI #1 used to identify the network slice #1 may be all the processing modules of the PDSCH. For another example, if the service #1 corresponding to the network slice #1 is a non-high-definition video live streaming service, the target processing module determined based on the S-NSSAI #1 used to identify the network slice #1 may be some processing modules of the PDSCH.

During implementation, the protocol stack matches the S-NSSAI #1 with the foregoing correspondence #2 (the uplink correspondence and the downlink correspondence), and finally matches a group of processing modules corresponding to the S-NSSAI #1 from the downlink correspondence. The group of processing modules are target processing modules that correspond to the S-NSSAI #1 and that are of the PDSCH processed by using the GPU. For detailed descriptions of the uplink correspondence, refer to the foregoing related descriptions of Table 2, and details are not described again.

Step S906: The protocol stack initiates a PDU session based on the S-NSSAI #1, to perform a PDU session establishment process.

For detailed descriptions of the step, refer to the related descriptions of step S806 in the method 800, and details are not described again.

In the PDU session establishment process, for signaling transmitted through the PUSCH, the CPU may be used to process the signaling through the processing module of the PUSCH, and for the signaling transmitted through the PDSCH, the GPU may be used to process the signaling through the target processing module. The following specifically describes, through step S9061 and step S9062, a process of processing the signaling transmitted through the PUSCH and the PDSCH.

Step S9061: The protocol stack invokes the CPU, to enable the CPU to process, through the processing module of the PUSCH, the signaling transmitted through the PUSCH.

For the signaling transmitted through the PUSCH in the PDU session establishment process, refer to related descriptions of step S8061, and details are not described herein again.

During implementation, for example, after the signaling transmitted through the PUSCH is processed on the higher layer protocol stack of the protocol stack (that is, SDAP layer processing, PDCP layer processing, RLC layer processing, and MAC layer processing are sequentially performed), the CPU may be invoked through the higher layer protocol stack or the physical layer. The CPU processes, through the processing module of the PUSCH, the signaling transmitted through the PUSCH, and finally, the CPU controls the transceiver to send the processed signaling.

Step S9062: The protocol stack invokes the GPU, and the GPU processes, through the target processing module, the signaling transmitted through the PDSCH in the PDU session establishment process.

For the signaling transmitted through the PDSCH in the PDU session establishment process, refer to related descriptions of step S8062, and details are not described herein again.

During implementation, the protocol stack receives, through the transceiver, the signaling transmitted through the PDSCH, and the protocol stack invokes the GPU through the higher layer protocol stack or the physical layer, to enable the GPU to perform, through the target processing module of the PDSCH, physical layer processing on the signaling transmitted through the PDSCH. This is not limited herein. In addition, after the GPU (or the GPU and the CPU) performs complete physical layer processing on the signaling, the CPU obtains a final processing result (namely, the signaling obtained after complete physical layer processing is performed), to enable the CPU to perform, based on the final processing result, processing performed on the higher layer protocol stack on the processed signaling (that is, sequentially performs MAC layer processing, RLC layer processing, PDCP layer processing, and SDAP layer processing).

When the target processing module includes all the processing modules of the PDSCH, the protocol stack invokes the GPU. After processing, through the target processing module, the signaling transmitted through the PDSCH, the GPU feeds back the final processing result (namely, the signaling obtained after complete physical layer processing is performed) to the CPU, to enable the CPU to perform, based on the final processing result, processing performed on the higher layer protocol stack on the processed signaling. In this case, the GPU performs complete physical layer processing on the signaling, and the GPU obtains the signaling, namely, the final processing result, that is obtained after complete physical layer processing is performed, and feeds back the final processing result to the CPU.

When the target processing module includes some processing modules of the PDSCH, the protocol stack invokes the GPU, and the GPU processes the signaling through the target processing module. The CPU processes the signaling through the other processing modules other than the target processing module in the PDSCH. The CPU obtains the final processing result (the signaling obtained after complete physical layer processing is performed). Finally, the CPU performs, based on the final processing result, processing performed on the higher layer protocol stack on the processed signaling. In this case, the GPU performs one part of physical layer processing on the signaling, and the CPU performs the other part of physical layer processing on the signaling. Therefore, the CPU and the GPU jointly perform complete physical layer processing on the signaling.

If processing procedures of some processing modules of the PDSCH that are included in the target processing module are non-continuous, for example, a previous processing module is processed by using the GPU, a next processing module is processed by using the CPU, and a next processing module is processed by using the GPU. The GPU and the CPU feed back a processing result of a current processing module to each other, to enable the GPU or the CPU to perform processing of the next processing module based on the processing result that is fed back. For example, the target processing module processed by using the GPU includes the channel decoding module, the de-rate matching module, and the descrambling module. Then, the CPU processes the remaining processing modules. The CPU sequentially processes the signaling through the resource demapping module, the antenna port demapping module, the layer demapping module, and the demodulation module, and feeds back an obtained processing result #1 to the GPU. Based on the processing result #1, the GPU continues to sequentially process the signaling through the descrambling module, the de-rate matching module, and the channel decoding module, and feeds back an obtained processing result #2 to the CPU. Based on the processing result #2, the CPU continues to sequentially process the signaling through the code block combination module and the CRC removal module, to obtain a final processing result.

As described above, during implementation, for example, the GPU is configured with interfaces of various processing modules of the PUSCH and the PDSCH. After determining the target processing module of the PDSCH, the protocol stack invokes an interface of each processing module in the target processing module, so that the GPU can be run. In this way, the GPU is invoked by invoking the interface of each processing module configured in the GPU, and signaling transmitted through the PDSCH is processed through the target processing module.

After establishment of the PDU session is completed, step S907 to step S910 are performed. For detailed descriptions of step S907 to step S910, refer to related descriptions of step S807 to step S810 in the method 800, and details are not described again.

Step S911: The protocol stack receives uplink service data from an application layer #1, the protocol stack invokes the CPU, to enable the CPU to process the uplink service data through the processing module of the PUSCH, and the CPU controls the transceiver to send the processed uplink service data.

During implementation, after the protocol stack receives the uplink service data, the CPU performs physical layer processing on the uplink service data through the processing module of the PUSCH after the higher layer protocol stack of the protocol stack processes the uplink service data (sequentially performs SDAP layer processing, PDCP layer processing, RLC layer processing, and MAC layer processing). In addition, after physical layer processing on the uplink service data is completed, the CPU finally controls the transceiver to send the processed uplink service data.

As described above, the application #1 sends the uplink service data to the URSP module through the slice data interface #1, and the URSP module forwards the uplink service data to the protocol stack through the slice service interface #1 corresponding to the slice data interface #1, so that the protocol stack transmits the uplink service data through the slice channel of the slice service interface #1.

Step S912: The protocol stack receives the downlink service data through the transceiver, the protocol stack invokes the GPU, to enable the GPU to process the downlink service data through the target processing module of the PDSCH, and after the protocol stack completely processes the downlink service data, the protocol stack sends the processed downlink service data to the application #1 through the URSP module.

During implementation, after receiving the downlink service data, the protocol stack may invoke the GPU through the higher layer protocol stack or the physical layer, to enable the GPU to perform physical layer processing on the downlink service data through the target processing module of the PDSCH. This is not limited herein. After the GPU (or the GPU and the CPU) performs complete physical layer processing on the downlink service data, the CPU obtains a final processing result (namely, the downlink service data obtained after complete physical layer processing is performed), and performs processing performed on the higher layer protocol stack on the processed downlink service data (that is, sequentially performs MAC layer processing, RLC layer processing, PDCP layer processing, and SDAP layer processing). It may be understood that, after the higher layer protocol stack completes processing on the downlink service data, it may be considered that the protocol stack completes complete processing on the downlink service data. After the protocol stack completes complete processing on the downlink service data, the protocol stack sends the processed downlink service data to the application #1 through the URSP module.

In addition, in the process in which the protocol stack sends the processed downlink service data to the application #1 through the URSP module, the protocol stack sends the downlink service data to the URSP module through the slice service interface #1, and the URSP module forwards the downlink service data to the application #1 through the slice data interface #1 corresponding to the slice service interface #1.

Because in step S905, the protocol stack has determined the target processing module of the PDSCH that is processed by using the GPU, for the downlink service data, the protocol stack may directly invoke the GPU, to enable the GPU to process the downlink service data through the target processing module.

When the target processing module includes all the processing modules of the PDSCH, the protocol stack invokes the GPU, and after processing the downlink service data through the target processing module, the GPU feeds back a final processing result (namely, the downlink service data obtained after complete physical layer processing is performed) to the CPU, to enable the CPU to perform, based on the final processing result, processing performed on the higher layer protocol stack on the processed downlink service data. In this case, the GPU performs complete physical layer processing on the downlink service data, and the GPU obtains the downlink service data, namely, the final processing result, that is obtained after complete physical layer processing is performed, and feeds back the final processing result to the CPU.

When the target processing module includes some processing modules of the PDSCH, the protocol stack invokes the GPU, and the GPU processes the downlink service data through the target processing module. For other processing modules other than the target processing module in the PDSCH, the protocol stack invokes the CPU. The CPU processes the downlink service data through the other processing modules. The CPU obtains the final processing result (the downlink service data obtained after complete physical layer processing is performed). Finally, the CPU performs, based on the final processing result, processing performed on the higher layer protocol stack on the processed downlink service data. In this case, the GPU performs one part of physical layer processing on the downlink service data, and the CPU performs the other part of physical layer processing on the downlink service data. Therefore, the CPU and the GPU jointly perform complete physical layer processing on the downlink service data.

If processing procedures of some processing modules of the PDSCH that are included in the target processing module are non-continuous, for example, a previous processing module is processed by using the GPU, a next processing module is processed by using the CPU, and a next processing module is processed by using the GPU. The GPU and the CPU feed back a processing result of a current processing module to each other, to enable the GPU or the CPU to perform processing of the next processing module based on the processing result that is fed back. For example, the target processing module processed by using the GPU includes the channel decoding module, the de-rate matching module, and the descrambling module. Then, the CPU processes the remaining processing modules. The CPU sequentially processes the downlink service data through the resource demapping module, the antenna port demapping module, the delayer mapping module, and the demodulation module, and feeds back an obtained processing result #1 to the GPU. Based on the processing result #1, the GPU continues to sequentially process the downlink service data through the descrambling module, the de-rate matching module, and the channel decoding module, and feeds back an obtained processing result #2 to the CPU. Based on the processing result #2, the CPU continues to sequentially process the downlink service data through the code block combination module and the CRC removal module, to obtain a final processing result.

It should be understood that, a sequence of step S911 and step S912 is not represented by a size of a label, and a sequence of transmission of the uplink service data and the downlink service data is subject to a specific service. For example, step S911 may also be performed after step S912.

In the foregoing embodiment, the terminal device determines, based on the service identifier #1, the network slice #1 corresponding to the service identifier #1, and determines, based on the network slice #1, the target processing module of the PDSCH that is processed by using the GPU. In this way, the GPU may be used to perform, through the target processing module, physical layer processing on the data (the service data and the signaling) transmitted through the PDSCH. Compared with performing physical layer processing on the data by using the CPU, performing physical layer processing on the data by using the GPU can significantly improve a processing speed, and improve real-time performance in a scenario in which the network slice #1 corresponds to the service identifier #1.

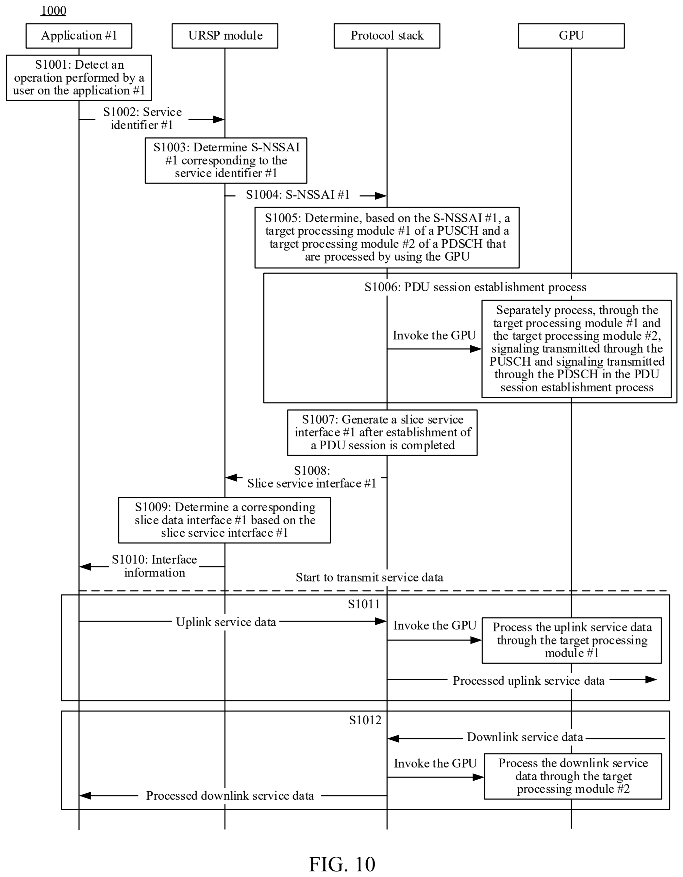

FIG. 10 is an example flowchart of a method 1000 based on network slice communication according to an embodiment of this application. In the method 1000, a terminal device determines, based on S-NSSAI used to identify a network slice, a target processing module of a PUSCH and a target processing module of a PDSCH that are to be processed by using a GPU. The GPU separately processes uplink data (service data and signaling) and downlink data through a target processing module of the PUSCH and a target processing module of the PDSCH, to implement physical layer acceleration, improve a processing speed, and satisfy a requirement of a current network slice scenario on real-time performance.

For detailed descriptions of step S1001 and step S1004, refer to related descriptions of step S801 and step S804 in the method 800. Details are not described herein again. The only difference lies in that a service identifier #1 and S-NSSAI #1 in the method 1000 are not completely the same as an application #1, a service identifier #1, and S-NSSAI #1 in the method 800.

It may be understood that, a service #1 identified by the service identifier #1 and a network slice #1 identified based on the S-NSSAI #1 in the method 1000 are applicable to a scenario having a relatively high requirement on real-time performance of the PDSCH and the PUSCH. For example, the application #1 may be a cloud game application, the service #1 is a game service, the service identifier #1 used to identify the service #1 is used to identify the game service, and a corresponding network slice #1 is applicable to the game service.

Step S1005: A protocol stack determines, based on the S-NSSAI #1, a target processing module #1 of the PUSCH and a target processing module #2 of the PDSCH that are processed by using the GPU.

Step S1006: The protocol stack initiates a PDU session based on the S-NSSAI #1, to perform a PDU session establishment process. In the PDU session establishment process, the protocol stack invokes the GPU, and the GPU separately processes, through the target processing module #1 and the target processing module #2, signaling transmitted through the PUSCH and signaling transmitted through the PDSCH in the PDU session establishment process.

In this step, the GPU processes, through the target processing module #1, the signaling transmitted through the PUSCH in the PDU session establishment process, and processes, through the target processing module #2, the signaling transmitted through the PDSCH in the PDU session establishment process.

For detailed descriptions of the process in which the protocol stack invokes the GPU, and the GPU processes, through the target processing module #1, the signaling transmitted through the PUSCH in the PDU session establishment process, refer to related descriptions of step S8061, and details are not described herein again. For detailed descriptions of the process in which the protocol stack invokes the GPU and the GPU processes, through the target processing module #2, the signaling transmitted through the PDSCH in the PDU session establishment process, refer to related descriptions of step S9062, and details are not described herein again.

After establishment of the PDU session is completed, step S1007 to step S1010 are performed. For detailed descriptions of step S1007 to step S1010, refer to related descriptions of step S807 to step S810 in the method 800, and details are not described again.

Step S1011: The protocol stack receives uplink service data from an application layer #1, the protocol stack invokes the GPU, the GPU processes the uplink service data through the target processing module #1, the CPU obtains a final processing result (namely, uplink service data obtained after complete physical layer processing is performed), and finally, the CPU controls the transceiver to send the processed uplink service data.

Because in step S1005, the protocol stack has determined the target processing module #1 of the PUSCH that is processed by using the GPU, for the uplink service data, the protocol stack may directly invoke the GPU, to enable the GPU to process the uplink service data through the target processing module #1.

For detailed descriptions of the step, refer to the related descriptions of step S811, and details are not described again.

Step S1012: The protocol stack receives the downlink service data through the transceiver, the protocol stack invokes the GPU, to enable the GPU to process the downlink service data through the target processing module #2 of the PDSCH, and after the protocol stack completely processes the downlink service data, the protocol stack sends the processed downlink service data to the application #1 through the URSP module.

Because in step S1005, the protocol stack has determined the target processing module #2 of the PDSCH that is processed by using the GPU, for the downlink service data, the protocol stack may directly invoke the GPU, to enable the GPU to process the downlink service data through the target processing module #2.

For detailed descriptions of the step, refer to the related descriptions of step S912, and details are not described again.

It should be understood that, a sequence of step S1011 and step S1012 is not represented by a size of a label, and a sequence of transmission of the uplink service data and the downlink service data is subject to a specific service. For example, step S1011 may also be performed after step S1012.

In the foregoing embodiment, the terminal device determines, based on the service identifier #1, the network slice #1 corresponding to the service identifier #1, and determines, based on the network slice #1, the target processing module #1 of the PUSCH and the target processing module #2 of the PDSCH that are processed by using the GPU. In this way, the GPU may be used to perform, through the target processing module #1, physical layer processing on the data (the service data and the signaling) transmitted through the PUSCH, and the GPU may be used to perform, through the target processing module #2, physical layer processing on the data (the service data and the signaling) transmitted through the PDSCH. Compared with performing physical layer processing on the data by using the CPU, performing physical layer processing on the data by using the GPU can significantly improve the processing speed and improve real-time performance of the scenario in which the network slice #1 corresponds to the service identifier #1.

In the embodiments in FIG. 8 to FIG. 10, the terminal device determines, based on the network slice, the target processing module of the PUSCH and/or the PDSCH that is processed by using the co-processor such as the GPU, and performs physical layer processing on the data by using the co-processor and through the target processing module. Compared with performing physical layer processing on the data by using the CPU, processing the data by using the co-processor can significantly improve a processing speed and improve real-time performance. In addition, the target processing module of the PUSCH and/or the PDSCH is determined based on the network slice, so that different target processing modules that are processed by using the co-processor can be determined based on different network slices. In this way, a case in which resource and power are wasted due to non-differential scheduling of calculation resources by using the co-processor in different network slice scenarios can be avoided, requirements of different application scenarios on real-time performance can be matched, and flexibility of a processing process can also be improved.

In another massive internet of things scenario such as data collection of an internet of things device (for example, a smart meter or various sensors), the terminal device may also determine, based on the network slice, that the co-processor does not need to be used to perform any physical layer processing on the data, and the CPU is used to perform physical layer processing on the data. In this way, resources and power can be saved to the greatest extent based on a requirement of a network slice scenario.

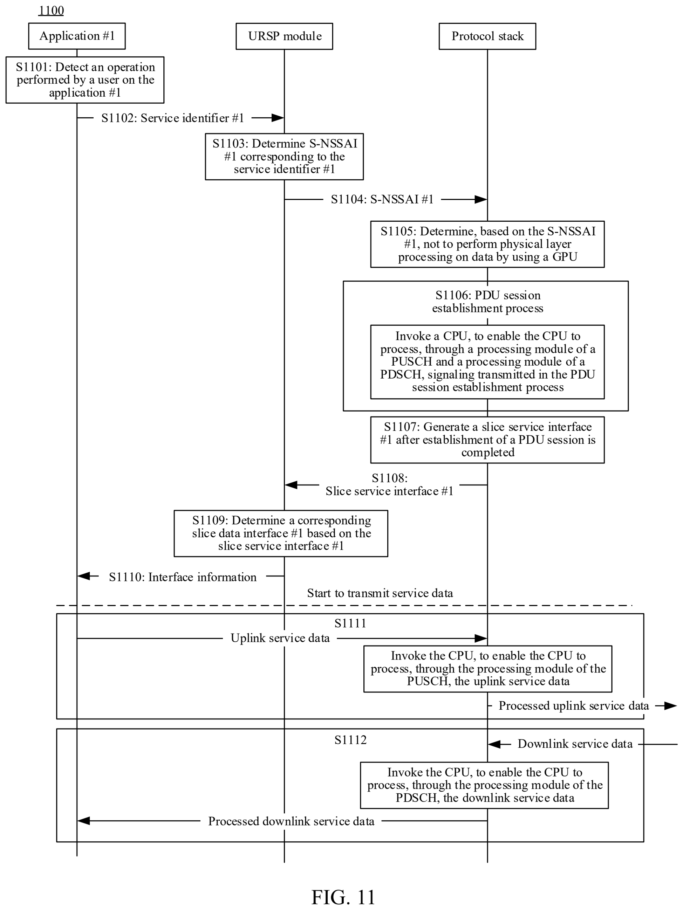

The following briefly describes, with reference to FIG. 11, a process in which the terminal device determines that physical layer processing on the data does not need to be performed by using the co-processor. Similarly, an example in which the GPU is used as the co-processor is used for description.

FIG. 11 is an example flowchart of a method 1100 based on network slice communication according to an embodiment of this application.

For detailed descriptions of step S1101 and step S1104, refer to related descriptions of step S801 and step S804 in the method 800. Details are not described herein again. The only difference lies in that a service identifier #1 and S-NSSAI #1 in the method 1000 are not completely the same as an application #1, a service identifier #1, and S-NSSAI #1 in the method 800.

It may be understood that, a service #1 identified by the service identifier #1 and a network slice #1 identified based on the S-NSSAI #1 in the method 1100 are applicable to a scenario having a not excessively high requirement on real-time performance of the PDSCH and the PUSCH. For example, the application #1 may be, for example, an application of a smart meter, the service #1 is a data collection service, the service identifier #1 used to identify the service #1 is used to identify the data collection service, and a corresponding network slice #1 is applicable to the data collection service. Using data collection of the smart meter as an example, the data collection service not only has a low requirement on real-time performance of a service, but also has relatively low power consumption.

Step S1105: A protocol stack determines, based on the S-NSSAI #1, not to perform physical layer processing on data by using a GPU.

Because the network slice #1 identified based on the S-NSSAI #1 does not have a high requirement on real-time performance of the data, there is no need to perform physical layer processing on the data by using the GPU, to avoid a waste of resources and power of the GPU, it is determined not to perform physical layer processing on the data by using the GPU.

During implementation, for example, the protocol stack matches the S-NSSAI #1 with the foregoing correspondence #2 (the uplink correspondence and the downlink correspondence), and if a group of processing modules corresponding to the S-NSSAI #1 are not matched in the correspondence, the protocol stack determines not to perform physical layer processing on the data by using the GPU.

Step S1106: The protocol stack initiates a PDU session based on the S-NSSAI #1, to perform a PDU session establishment process. In the PDU session establishment process, the protocol stack invokes a CPU, to enable the CPU to process, through a processing module of the PUSCH and a processing module of the PDSCH, the signaling transmitted in the PDU session establishment process.

It should be understood that, the signaling transmitted in the PDU session establishment process represents the signaling transmitted between a terminal device and an access network device through the PUSCH and the PDSCH. For detailed descriptions, refer to the foregoing related descriptions, and details are not described again.

It should be further understood that, the CPU processes, through the processing module of the PUSCH, the signaling transmitted through the PUSCH in the PDU session establishment process, and the CPU processes, through the processing module of the PDSCH, the signaling transmitted through the PDSCH in the PDU session establishment process.

After establishment of the PDU session is completed, step S1107 to step S1110 are performed. For detailed descriptions of step S1107 to step S1110, refer to related descriptions of step S807 to step S810 in the method 800, and details are not described again.

After step S1110, the terminal device starts to transmit service data.

Step S1111: The protocol stack receives uplink service data from an application layer #1, the protocol stack invokes the CPU, to enable the CPU to process the uplink service data through the processing module of the PUSCH, and the CPU controls the transceiver to send the processed uplink service data.

For detailed descriptions of the step, refer to the related descriptions of step S911, and details are not described again.

Step S1112: The protocol stack receives the downlink service data through the transceiver, the protocol stack invokes the CPU, to enable the CPU to process the downlink service data through the processing module of the PDSCH, and after the protocol stack completely processes the downlink service data, the protocol stack sends the processed downlink service data to the application #1 through the URSP module.

For detailed descriptions of the step, refer to the related descriptions of step S812, and details are not described again.

In this embodiment, the terminal device determines, based on the service identifier #1, the network slice #1 corresponding to the service identifier #1, and determines, based on the network slice #1, that the GPU does not need to be used to perform any physical layer processing on the data. In this way, only the CPU needs to be used to perform physical layer processing on the data, so that resources and power can be saved to the greatest extent based on a requirement of a network slice scenario.

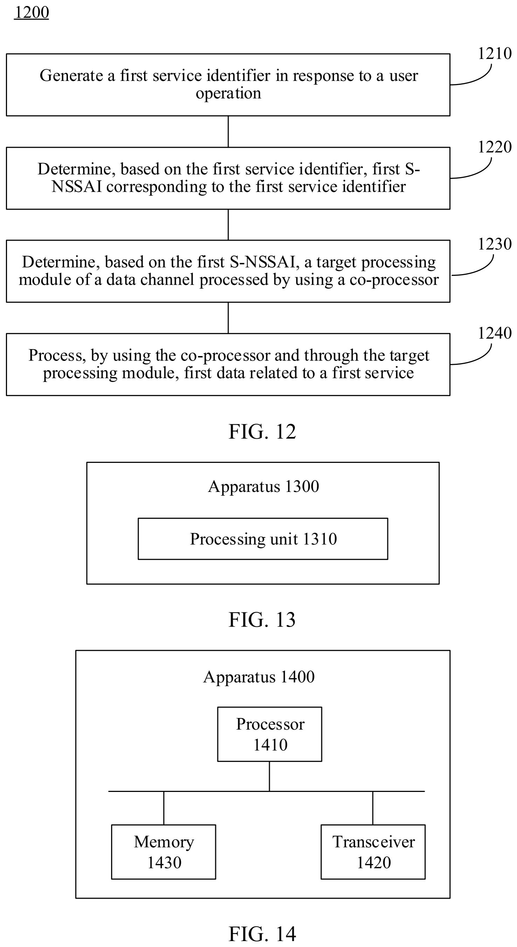

FIG. 12 is an example flowchart of a method 1200 based on network slice communication according to an embodiment of this application. The method 1200 describes only an embodiment in which a terminal device determines to process data through a co-processor. For an embodiment in which the co-processor does not need to process data, refer to related descriptions of the method 1100, and details are not described herein again. In addition, the method 1200 is described by using the terminal device as an execution entity of the method 1200.

Step S1210: The terminal device generates a first service identifier in response to a user operation, where the first service identifier is used to identify a currently to-be-performed first service.

In this step, a user performs an operation on the terminal device. The terminal device detects the user operation, and generates the first service identifier based on the first service related to the user operation.

For example, the user may enter the user operation through an application module. The application module may be a client application, or may be a browser application. This is not limited. For detailed exemplary descriptions of the application module, refer to the exemplary descriptions of the application #1 in the foregoing methods, and the foregoing application #1 may correspond to the application module herein.

For example, the first service may be any service. For example, the first service may be various types of services such as a live streaming service, a data backhaul service, a real-time monitoring service, a video service, an audio service, and a cloud game service.

For example, the first service identifier may be represented by using at least one of an APP ID, IP triple information, an FQDN, and a DNN. For detailed descriptions, refer to related descriptions of a service identifier #1 (corresponding to the first service identifier herein) in step S802, and details are not described again.

It should be understood that, the first service and the first service identifier in the foregoing examples are only schematic descriptions and should not constitute a limitation to the embodiments of this application.

Step S1220: The terminal device determines, based on the first service identifier, first S-NSSAI corresponding to the first service identifier, where the first S-NSSAI is used to indicate a first network slice corresponding to the first service.

In this step, in some embodiments, the terminal device determines, based on the first service identifier, the first S-NSSAI from a second correspondence used to indicate a plurality of service identifiers and a plurality of pieces of S-NSSAI, where at least one service identifier corresponds to one piece of S-NSSAI, one piece of S-NSSAI is used to uniquely identify one network slice, and one service identifier is used to uniquely identify one service.

For example, the second correspondence may be obtained from a network, or may be obtained from a general platform of the terminal device. This is not limited.

Because of diversity of service transmission and diversity of network changes, in an embodiment in which the second correspondence is obtained from the network, the terminal device may periodically obtain the second correspondence from the network, to obtain an updated second correspondence as much as possible, thereby obtaining S-NSSAI accurately matching a current service.

In another embodiment, the terminal device may alternatively determine the first S-NSSAI corresponding to the first service identifier in another manner. This is not limited in this embodiment of this application.

Step S1230: The terminal device determines, based on the first S-NSSAI, a target processing module of a data channel that is processed by using a co-processor, where the target processing module includes at least some of all processing modules of the data channel.

It should be understood that, at least some processing modules herein include all processing modules or some processing modules of all processing modules. The target processing module includes one or more processing modules of the data channel.

When the target processing module includes some processing modules in all the processing modules, it means that data is processed by using some processing modules, so that a requirement on real-time performance can be satisfied without wasting additional resources and power. The data is processed by using the co-processor and through remaining processing modules except some processing modules. When the target processing module includes all the processing modules, it means that a first network slice scenario of the first S-NSSAI has an excessively high requirement on real-time performance. Therefore, the co-processor is used to process data through all the processing modules.

As described above, the co-processor is a processor developed and applied to assist a central processing unit in completing processing work that cannot be executed by the central processing unit or has low execution efficiency and a poor effect. For example, the co-processor may be any one of the following processors: a GPU, an ISP, a DSP, an NPU, and an FPGA. It should be understood that, types of the coprocessors listed herein are merely exemplary descriptions, and any processor that can assist the CPU in completing some processing work that needs execution efficiency and has a relatively high execution effect may be used as an example of the co-processor.

In this step, a target processing module corresponding to the first S-NSSAI is determined based on the first S-NSSAI, and when data processing is performed subsequently, the co-processor may be used to process the data through the target processing module. In this way, a data processing speed can be improved, to satisfy real-time performance under a first network slice corresponding to the first S-NSSAI.

The processing module of the data channel is a processing module of a physical layer, and each processing module is configured to perform one step of the physical layer.

As described above, the data channel includes the PUSCH and the PDSCH, and the determined target processing module corresponding to the first S-NSSAI may include a processing module of the PUSCH, or may include a processing module of the PDSCH, or may include a processing module of the PUSCH and a processing module of the PDSCH. The following describes different cases.

### Case 1

The target processing module includes a first target processing module, and the first target processing module is the processing module of the PUSCH.

For all processing modules of the PUSCH, refer to the modules shown in FIG. 5A and data processing is performed in a direction shown by an arrow in FIG. 5A. The first target processing module is some or all of the processing modules of the PUSCH.

It may be understood that, in Case 1, the first service (or the first network slice) is a scenario in which a requirement on real-time performance of uplink transmission is relatively high, and a large amount of uplink data needs to be transmitted to a network. For example, the first service may be a service of a type such as a live streaming service, a data backhaul service, or a real-time monitoring service.

When the first target processing module is some of all the processing modules of the PUSCH, for example, the first service may be a service such as a non-high-definition live streaming service, a non-high-definition data backhaul service, or a non-high-definition and real-time monitoring service.

When the first target processing module is all the processing modules of the PUSCH, for example, the first service may be a service such as a high-definition live streaming service, a high-definition data backhaul service, or a high-definition and real-time monitoring service.

### Case 2

The target processing module includes a second target processing module, and the second target processing module is the processing module of the PDSCH.

For all processing modules of the PDSCH, refer to the modules shown in FIG. 4B and data processing is performed in a direction shown by an arrow in FIG. 4B. The second target processing module is some or all of the processing modules of the PDSCH.

It may be understood that, in Case 2, the first service (or the first network slice) is a scenario in which a requirement on real-time performance of downlink transmission is relatively high, and a large amount of downlink data needs to be transmitted to the terminal device. For example, the first service may be a service of a type such as a video service or an audio service.

When the second target processing module is some of all the processing modules of the PDSCH, for example, the first service may be a service such as a non-high-definition video service or a non-super quality (super quality, SQ) audio service.

When the second target processing module is all the processing modules of the PDSCH, for example, the first service may be a service such as a high-definition video service or an SQ audio service.

### Case 3

The target processing module includes a first target processing module and a second target processing module, the first target processing module is the processing module of the PUSCH, and the second target processing module is the processing module of the PDSCH.

It may be understood that, in Case 3, the first service (or the first network slice) is a scenario in which a requirement on real-time performance of both uplink transmission and downlink transmission is relatively high, and a large amount of uplink data needs to be transmitted to a network and a large amount of downlink data needs to be downloaded in the terminal device. For example, the first service may be a service such as a cloud game service.

It should be noted that, when the first target processing module includes all processing modules of the PUSCH and the second target processing module includes all processing modules of the PDSCH, it is considered that the target processing module includes all the processing modules of the data channel.

Step S1240: The terminal device processes first data related to the first service by using the co-processor and through the target processing module.

The first data and processing of the first data are described below with reference to three cases in step 1230.

### Refer to Case 1

In Case 1 in which the target processing module includes the first target processing module, the first data includes signaling or uplink service data transmitted through the PUSCH. The signaling transmitted through the PUSCH may be signaling of a PDU session establishment process. For detailed descriptions, refer to the foregoing related descriptions, and details are not described again.

When the first target processing module includes all the processing modules of the PUSCH, the co-processor is used to perform physical layer processing on the first data through the target processing module.

When the first target processing module includes some processing modules of the PUSCH, not only the co-processor is used to process the first data, but also the CPU needs to be used to process the first data. That is, the co-processor is used to process the first data through the first target processing module, and the CPU is used to process the first data through other processing modules other than the first target processing module in all the processing modules of the PUSCH, to perform complete physical layer processing on the first data.

If processing procedures of some processing modules of the PUSCH that are included in the first target processing module are non-continuous, for example, a previous processing module is processed by using the co-processor, a next processing module is processed by the CPU, and a next processing module is processed by using the co-processor. The co-processor and the CPU feed back a processing result of a current processing module to each other, to enable the co-processor or the CPU to perform processing of the next processing module based on the processing result that is fed back, so as to finally complete complete physical layer processing on the first data. For detailed descriptions herein, refer to the related descriptions of step S8061, and details are not described again.

It should be understood that, after performing complete physical layer processing on the first data transmitted through the PUSCH, the terminal device may send the processed first data through a transceiver.

### Refer to Case 2

In Case 2 in which the target processing module includes the second target processing module, the first data includes signaling or downlink service data transmitted through the PDSCH. The signaling transmitted through the PDSCH may be signaling of a PDU session establishment process. For detailed descriptions, refer to the foregoing related descriptions, and details are not described again.

When the second target processing module includes all the processing modules of the PDSCH, the co-processor is used to perform physical layer processing on the first data through the second target processing module.

When the second target processing module includes some processing modules of the PDSCH, not only the co-processor is used to process the first data, but also the CPU needs to be used to process the first data. That is, the co-processor is used to process the first data through the second target processing module, and the CPU is used to process the first data through other processing modules other than the second target processing module in all the processing modules of the PDSCH, to perform complete physical layer processing on the first data.

If processing procedures of some processing modules of the PDSCH that are included in the second target processing module are non-continuous, for example, a previous processing module is processed by using the co-processor, a next processing module is processed by the CPU, and a next processing module is processed by using the co-processor. The co-processor and the CPU feed back a processing result of a current processing module to each other, to enable the co-processor or the CPU to perform processing of the next processing module based on the processing result that is fed back, so as to finally complete complete physical layer processing on the first data. For detailed descriptions herein, refer to the related descriptions of step S9061, and details are not described again.

It should be understood that, after performing complete physical layer processing on the first data transmitted through the PDSCH, the terminal device performs processing performed on the higher layer protocol stack on the processed first data (that is, sequentially performs MAC layer processing, RLC layer processing, PDCP layer processing, and SDAP layer processing), to obtain finally processed first data.

### Refer to Case 3

In Case 3 in which the target processing module includes the first target processing module and the second target processing module, the first data includes signaling or downlink service data that is transmitted through the PUSCH, and the first data includes signaling or downlink service data that is transmitted through the PDSCH. The signaling transmitted through the PDSCH or the PUSCH may be signaling of a PDU session establishment process. For detailed descriptions, refer to the foregoing related descriptions, and details are not described again.

It should be understood that, in Case 3, the signaling or the uplink service data that is transmitted through the PUSCH is processed by using the co-processor and through the first target processing module, and the signaling or the downlink service data that is transmitted through the PDSCH is processed by using the co-processor and through the second target processing module.

When the first target processing module includes all the processing modules of the PUSCH, the co-processor is used to perform physical layer processing on the first data through the first target processing module. When the first target processing module includes some processing modules of the PUSCH, not only the co-processor is used to process the first data, but also the CPU needs to be used to process the first data. For detailed descriptions, refer to the related descriptions of step S8061, and details are not described again.

When the second target processing module includes all the processing modules of the PDSCH, the co-processor is used to perform physical layer processing on the first data through the second target processing module. When the second target processing module includes some processing modules of the PDSCH, not only the co-processor is used to process the first data, but also the CPU needs to be used to process the first data. For detailed descriptions, refer to the related descriptions of step S9061, and details are not described again.

In the method based on network slice communication provided in this embodiment of this application, the terminal device determines, based on the first service identifier, the first S-NSSAI used to indicate the first network slice, and determines, based on the first S-NSSAI, the target processing module of the data channel that is processed by using the co-processor. In this way, compared with performing physical layer processing on data by using a CPU, performing physical layer processing on data by using the co-processor and through the target processing module can significantly improve a processing speed and real-time performance. In addition, the target processing module of the data channel is determined based on the first S-NSSAI, and different target processing modules can be determined based on S-NSSAI of different network slices, so that a case in which resource and power are wasted due to non-differential scheduling of calculation resources by using the co-processor in different network slice scenarios can be avoided, requirements of different application scenarios on real-time performance can be matched, and flexibility of a processing process can also be improved. Therefore, in this embodiment of this application, network slice-based adaptive acceleration without causing resource and power waste is generally implemented, and the requirements of different application scenarios on the real-time performance are satisfied.

For a case in which the terminal device determines the target processing module in step S1230, in some embodiments, the process may be as follows:

The terminal device determines, based on the first S-NSSAI, the target processing module corresponding to the first S-NSSAI in first correspondences between a plurality of pieces of S-NSSAI and a plurality of groups of processing modules, where each piece of S-NSSAI corresponds to at least one group of processing modules.

It should be understood that, the target processing module corresponding to the first S-NSSAI is at least one of a plurality of groups of processing modules. After determining the at least one group of processing modules corresponding to the first S-NSSAI from the first correspondence, the terminal device determines the at least one group of processing modules as target processing modules.

The first correspondence may be obtained by the terminal device from a network, or may be prestored in the terminal device. This is not limited herein.

In this way, the target processing module corresponding to the first S-NSSAI is determined by the first correspondences between the plurality of pieces of S-NSSAI and the plurality of groups of processing modules, so that a design can be simplified, and implementation can be facilitated.

In some embodiments, the first correspondences include an uplink correspondence and a downlink correspondence, where the uplink correspondence is used to indicate a one-to-one correspondence between M pieces of S-NSSAI and M groups of processing modules, the downlink correspondence is used to indicate a one-to-one correspondence between N pieces of S-NSSAI and N groups of processing modules, and both M and N are integers greater than or equal to 1.

M and N may be the same or may be different. This is not limited, and is subject to specific implementation.

In this embodiment, the terminal device may separately match the first S-NSSAI with the uplink correspondence and the downlink correspondence, to finally determine the target processing module corresponding to the first S-NSSAI.

Because the same S-NSSAI exists in the uplink correspondence and the downlink correspondence, one piece of S-NSSAI may correspond to one group of processing modules, or may correspond to two groups of processing modules.

In an embodiment in which one piece of S-NSSAI corresponds to two groups of processing modules, one group of processing modules of the two groups of processing modules are processing modules of the PUSCH, and the other group of processing modules of the two groups of processing modules are processing modules of the PDSCH. For example, referring to Table 1 and Table 2, the S-NSSAI #A may correspond to a group of processing modules (including the channel encoding module, the rate matching module, and the scrambling module) of the PUSCH, or may correspond to a group of processing modules (including the channel decoding module and the de-rate matching module) of the PDSCH. Therefore, the S-NSSAI #A corresponds to two groups of processing modules.

In an embodiment in which one piece of S-NSSAI corresponds to a group of processing modules, the group of processing modules are processing modules of the PUSCH or processing modules of the PDSCH. For example, referring to Table 1 and Table 2, the S-NSSAI #B corresponds only to the processing modules (including the channel encoding module) of the PUSCH.

It should be understood that, in this embodiment, because the first correspondence includes the uplink correspondence and the downlink correspondence, the determined target processing module may belong to any one of the foregoing three cases. That is, the target processing module includes the first target processing module, the target processing module includes the second target processing module, and the target processing module includes the first target processing module and the second target processing module.

In some other embodiments, the first correspondence includes only the foregoing uplink correspondence.

In this embodiment, the terminal device may match the first S-NSSAI with the uplink correspondence, to determine the target processing module. It may be understood that, in this embodiment, the device allows only to perform acceleration processing on the data transmitted through the PUSCH.

It should be understood that, in this embodiment, because the first correspondence includes only the uplink correspondence, the determined target processing module includes the first target processing module.

In some other embodiments, the first correspondence includes only the foregoing downlink correspondence.

In this embodiment, the terminal device may match the first S-NSSAI with the downlink correspondence, to determine the target processing module. It may be understood that, in this embodiment, the device allows only to perform acceleration processing on the data transmitted through the PDSCH.

It should be understood that, in this embodiment, because the first correspondence includes only the downlink correspondence, the determined target processing module includes the second target processing module.

Implementation of the method 1200 is described below through interaction between modules in the terminal device. The terminal device includes an application module, a URSP module, and a protocol stack. The application module may be any application program of an application layer.

In some embodiments, the application module generates a first service identifier in response to a user operation;
the application module sends the first service identifier to the URSP module;
the URSP module determines the first S-NSSAI based on the first service identifier;
the URSP module sends the first S-NSSAI to the protocol stack;
the protocol stack determines the target processing module based on the first S-NSSAI; and
the protocol stack invokes the co-processor, where the co-processor processes the first data through the target processing module.

In some embodiments, after the URSP module sends the first S-NSSAI to the protocol stack, the method 1200 further includes:

The protocol stack establishes a PDU session with a network device based on the first S-NSSAI;
the protocol stack generates a slice service interface corresponding to the first S-NSSAI after establishment of the PDU session is completed;
the protocol stack sends service interface information used to indicate the slice service interface to the URSP module;
the URSP module determines, based on the slice service interface, a slice data interface corresponding to the slice service interface; and
the URSP module sends data interface information used to indicate the slice data interface to the application module, to enable the application module to transmit service data through the slice data interface.

For detailed descriptions of the steps performed by each module, refer to the related descriptions above, and details are not described again.

In some embodiments, referring to FIG. 6, the application module is configured in an application layer, the URSP module is configured in an application framework layer, and the protocol stack is configured in a modem. In this way, compared with configuring the URSP module in the modem, configuring the URSP module in the application framework layer to implement a URSP function does not relate to modification of content of the modem, so that admission difficulty of participating, by a developer, in emulation of a network slice technology of a 5G terminal can be reduced, and flexibility of implementing the URSP function can be improved.

In some other embodiments, referring to FIG. 7, the application module is configured in an application layer, and both the URSP module and the protocol stack are configured in the application layer. In this way, compared with configuring the URSP module in the operating system, configuring the URSP module in the application layer to implement a URSP function does not relate to modification of content of the operating system, so that admission difficulty of participating, by a developer, in emulation of a network slice technology of a 5G terminal can be reduced, and flexibility of implementing the URSP function can be improved.

For example, still referring to FIG. 7, the protocol stack is configured in software-defined radio SDR, and the URSP module is configured in the SDR. In this way, both the URSP module and the protocol stack are integrated into the SDR, so that integration of a plurality of functional modules can be better implemented, memory occupation is reduced, and system management is facilitated.

It should be noted that, the sequence number of the steps in the foregoing method embodiments does not mean the sequence of execution, the sequence of execution of each process should be determined by functions and internal logic, and any limitation should not be constituted on the implementation process of the embodiments of this application.

A method based on network slice communication provided in the embodiments of this application is described above in detail with reference to FIG. 1 to FIG. 12. An apparatus based on network slice communication provided in the embodiments of this application is described below in detail with reference to FIG. 13 and FIG. 14.

FIG. 13 is an example block diagram of an apparatus 1300 according to an embodiment of this application. The apparatus 1300 is a terminal device, or may be a chip in the terminal device.

The apparatus 1300 is configured to perform the procedures and/or steps corresponding to the terminal device in the foregoing method 1200. The apparatus 1300 includes a processing unit 1310. The processing unit 1310 is configured to perform the following steps:
generating a first service identifier in response to a user operation, where the first service identifier is used to identify a currently to-be-performed first service;
determining, based on the first service identifier, first network slice selection assistance information S-NSSAI corresponding to the first service identifier, where the first S-NSSAI is used to indicate a first network slice corresponding to the first service;
determining, based on the first S-NSSAI, a target processing module of a data channel that is processed by using a co-processor, where the target processing module includes at least some of all processing modules of the data channel; and
processing, by using the co-processor and through the target processing module, first data related to the first service.

Optionally, the apparatus 1300 includes an application module, a user route selection policy URSP module, and a protocol stack; and the processing unit 1310 is specifically configured to:
control the application module to generate a first service identifier in response to a user operation; and the processing unit 1310 is further specifically configured to:
control the application module to send the first service identifier to the URSP module; and
the processing unit 1310 is specifically configured to:
   control the URSP module to determine the first S-NSSAI based on the first service identifier; and the processing unit 1310 is further configured to:
   control the URSP module to send the first S-NSSAI to the protocol stack; and
the processing unit 1310 is specifically configured to:
   control the protocol stack to determine the target processing module based on the first S-NSSAI; and
   control the protocol stack to invoke the co-processor, where the co-processor processes the first data through the target processing module.

Optionally, the processing unit 1310 is further configured to:
control the protocol stack to establish a packet data unit PDU session with a network device based on the first S-NSSAI;
control the protocol stack to generate a slice service interface corresponding to the first S-NSSAI after establishment of the PDU session is completed;
control the protocol stack to send service interface information used to indicate the slice service interface to the URSP module;
control the URSP module to determine, based on the slice service interface, a slice data interface corresponding to the slice service interface; and
control the URSP module to send data interface information used to indicate the slice data interface to the application module, to enable the application module to transmit service data through the slice data interface.

Optionally, the application module is configured in an application layer, the URSP module is configured in an application framework layer, and the protocol stack is configured in a modem.

Optionally, the application module is configured in an application layer, and both the URSP module and the protocol stack are configured in the application layer.

Optionally, the protocol stack is configured in software-defined radio SDR, and the URSP module is configured in the SDR.

Optionally, the processing unit 1310 is specifically configured to:
determine, based on the first S-NSSAI, the target processing module corresponding to the first S-NSSAI in first correspondences between a plurality of pieces of S-NSSAI and a plurality of groups of processing modules, where one piece of S-NSSAI corresponds to at least one group of processing modules.

Optionally, the first correspondences include an uplink correspondence and a downlink correspondence, where the uplink correspondence is used to indicate a one-to-one correspondence between M pieces of S-NSSAI and M groups of processing modules, the downlink correspondence is used to indicate a one-to-one correspondence between N pieces of S-NSSAI and N groups of processing modules, and both M and N are integers greater than or equal to 1.

Optionally, the processing unit 1310 is specifically configured to:
determine, based on the first service identifier, the first S-NSSAI in second correspondences between a plurality of service identifiers and the plurality of pieces of S-NSSAI, where at least one service identifier corresponds to one piece of S-NSSAI.

Optionally, the target processing module includes a first target processing module, the first target processing module is a processing module of a physical uplink shared channel PUSCH, and the first data includes signaling or uplink service data that is transmitted through the PUSCH.

Optionally, the target processing module includes a second target processing module, the second target processing module is a processing module of a physical downlink shared channel PDSCH, and the first data includes signaling or downlink service data that is transmitted through the PDSCH.

Optionally, the target processing module includes a first target processing module and a second target processing module, the first target processing module is a processing module of a physical uplink shared channel PUSCH, the second target processing module is a processing module of a physical downlink shared channel PDSCH, the first data includes signaling or uplink service data that is transmitted through the PUSCH, and the first data includes signaling or downlink service data that is transmitted through the PDSCH.

Optionally, the co-processor is any one of the following processors: a graphics processing unit GPU, an image signal processor ISP, a digital signal processor DSP, a neural network processor NPU, and a field-programmable gate array FPGA.

It should be understood that, the processing unit 1310 may be configured to perform the steps performed by the terminal device in the method 1200. For detailed descriptions, refer to the related descriptions above, and details are not described again.

In this embodiment of this application, the apparatus in FIG. 13 may alternatively be a chip or a chip system, for example, a system-on-chip (system-on-chip, SoC).

FIG. 14 is a schematic diagram of a structure of an apparatus 1400 according to an embodiment of this application. The apparatus 1400 is configured to perform the steps and/or procedures corresponding to the foregoing method embodiments.

The apparatus 1400 includes a processor 1410, a transceiver 1420, and a memory 1430. The processor 1410, the transceiver 1420, and the memory 1430 communicate with each other through an internal connection path. The processor 1410 may implement the functions of the processor 1410 in various possible implementations of the apparatus 1400. The memory 1430 is configured to store instructions, and the processor 1410 is configured to execute the instructions stored in the memory 1430. Alternatively, the processor 1410 may invoke these stored instructions to implement the functions of the processor 1410 in the apparatus 1400.

Optionally, the memory 1430 may include a read-only memory and a random access memory, and provide instructions and data for the processor. A part of the memory may further include a non-volatile random access memory. For example, the memory may further store information of a device type. The processor 1410 may be configured to execute the instructions stored in the memory, and when the processor 1410 executes the instructions stored in the memory, the processor 1410 is configured to perform the steps and/or procedures in the foregoing method embodiments corresponding to the network device or the terminal device.

The apparatus 1400 is configured to perform the procedures and/or steps corresponding to the terminal device in the foregoing method 1200. The processor 1410 is configured to perform the following steps:
generating a first service identifier in response to a user operation, where the first service identifier is used to identify a currently to-be-performed first service;
determining, based on the first service identifier, first network slice selection assistance information S-NSSAI corresponding to the first service identifier, where the first S-NSSAI is used to indicate a first network slice corresponding to the first service;
determining, based on the first S-NSSAI, a target processing module of a data channel that is processed by using a co-processor, where the target processing module includes at least some of all processing modules of the data channel; and
processing, by using the co-processor and through the target processing module, first data related to the first service.

Optionally, the apparatus 1400 includes an application module, a user route selection policy URSP module, and a protocol stack; and the processor 1410 is specifically configured to:
control the application module to generate a first service identifier in response to a user operation; and the processor 1410 is further configured to:
control the application module to send the first service identifier to the URSP module; and
the processor 1410 is specifically configured to:
   control the URSP module to determine the first S-NSSAI based on the first service identifier; and the processor 1410 is further configured to:
   control the URSP module to send the first S-NSSAI to the protocol stack; and
the processor 1410 is specifically configured to:
   control the protocol stack to determine the target processing module based on the first S-NSSAI; and
   control the protocol stack to invoke the co-processor, where the co-processor processes the first data through the target processing module.

Optionally, the processor 1410 is further configured to:
control the protocol stack to establish a packet data unit PDU session with a network device based on the first S-NSSAI;
control the protocol stack to generate a slice service interface corresponding to the first S-NSSAI after establishment of the PDU session is completed;
control the protocol stack to send service interface information used to indicate the slice service interface to the URSP module;
control the URSP module to determine, based on the slice service interface, a slice data interface corresponding to the slice service interface; and
control the URSP module to send data interface information used to indicate the slice data interface to the application module, to enable the application module to transmit service data through the slice data interface.

Optionally, the application module is configured in an application layer, the URSP module is configured in an application framework layer, and the protocol stack is configured in a modem.

Optionally, the application module is configured in an application layer, and both the URSP module and the protocol stack are configured in the application layer.

Optionally, the protocol stack is configured in software-defined radio SDR, and the URSP module is configured in the SDR.

Optionally, the processor 1410 is specifically configured to:
determine, based on the first S-NSSAI, the target processing module corresponding to the first S-NSSAI in first correspondences between a plurality of pieces of S-NSSAI and a plurality of groups of processing modules, where one piece of S-NSSAI corresponds to at least one group of processing modules.

Optionally, the first correspondences include an uplink correspondence and a downlink correspondence, where the uplink correspondence is used to indicate a one-to-one correspondence between M pieces of S-NSSAI and M groups of processing modules, the downlink correspondence is used to indicate a one-to-one correspondence between N pieces of S-NSSAI and N groups of processing modules, and both M and N are integers greater than or equal to 1.

Optionally, the processor 1410 is specifically configured to:
determine, based on the first service identifier, the first S-NSSAI in second correspondences between a plurality of service identifiers and the plurality of pieces of S-NSSAI, where at least one service identifier corresponds to one piece of S-NSSAI.

Optionally, the target processing module includes a first target processing module, the first target processing module is a processing module of a physical uplink shared channel PUSCH, and the first data includes signaling or uplink service data that is transmitted through the PUSCH.

Optionally, the target processing module includes a second target processing module, the second target processing module is a processing module of a physical downlink shared channel PDSCH, and the first data includes signaling or downlink service data that is transmitted through the PDSCH.

Optionally, the target processing module includes a first target processing module and a second target processing module, the first target processing module is a processing module of a physical uplink shared channel PUSCH, the second target processing module is a processing module of a physical downlink shared channel PDSCH, the first data includes signaling or uplink service data that is transmitted through the PUSCH, and the first data includes signaling or downlink service data that is transmitted through the PDSCH.

Optionally, the co-processor is any one of the following processors: a graphics processing unit GPU, an image signal processor ISP, a digital signal processor DSP, a neural network processor NPU, and a field-programmable gate array FPGA.

It should be understood that, specific processes in which the components perform the corresponding steps in the foregoing methods have been described in detail in the foregoing method embodiments. For brevity, details are not described herein again.

It should be understood that, in the embodiments of this application, the processor of the apparatus may be a central processing unit (central processing unit, CPU), and the processor may alternatively be another general-purpose processor, a digital signal processor (DSP), an application-specific integrated circuit (ASIC), a field-programmable gate array (FPGA) or another programmable logic device, a discrete gate or transistor logic device, a discrete hardware component, or the like. The general-purpose processor may be a microprocessor, or the processor may be any conventional processor or the like.

During implementation, the steps of the foregoing method may be completed through an integrated logic circuit of hardware or an instruction in the form of software in the processor. The steps in the methods disclosed with reference to the embodiments of this application may be directly implemented by a hardware processor, or may be implemented by a combination of hardware and a software unit in a processor. The software unit may be stored in a storage medium that is mature in the art, such as a RAM, a flash memory, a read-only memory (ROM), a programmable ROM, an electrically erasable programmable memory, or a register. The storage medium is located in the memory, and the processor executes the instructions in the memory, and completes the steps of the foregoing methods in combination with the hardware in the processor. To avoid repetition, details are not described herein.

Embodiments of this application provide a computer program product. The computer program product, when run on a terminal device, causes the terminal device to perform the technical solutions in the foregoing embodiments. The implementation principles and technical effects are similar to those in the method-related embodiments, and details are not described herein again.

Embodiments of this application provide a readable storage medium. The readable storage medium stores instructions. The instructions, when run on a terminal device, cause the terminal device to perform the technical solutions in the foregoing embodiments. Implementation principles and technical effects thereof are similar. Details are not described herein again.

Embodiments of this application provide a chip. The chip is configured to execute instructions. The chip, when run, performs the technical solutions in the foregoing embodiments. Implementation principles and technical effects thereof are similar. Details are not described herein again.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disk (solid-state disk, SSD)), or the like.

It should be understood that, an "embodiment" mentioned throughout this specification means that particular features, structures, or characteristics related to this embodiment are included in at least one embodiment of this application. Therefore, the embodiments in the entire specification may not necessarily refer to a same embodiment. In addition, these particular features, structures, or characteristics may be combined in one or more embodiments in any appropriate manner. It should be understood that, sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It should be understood that, in this application, "when" and "if" mean that UE or a base station performs corresponding processing in an objective situation, but do not constitute any limitation on time, do not require the UE or the base station to perform a determining action during implementation, and do not mean other limitations either.

A person of ordinary skill in the art may understand that, various numbers such as first and second in this application are merely used for differentiation for ease of descriptions, and are not used to limit the scope of embodiments of this application or represent a sequence.

An element represented by a singular number in this application is intended to represent "one or more" but not "one and only one", unless otherwise specified. In this application, unless otherwise specified, "at least one" is intended to represent "one or more", and "multiple" is intended to represent "two or more".

The term "and/or" herein merely describes an association relationship for describing associated objects and represents that three relationships may exist. For example, A and/or B may represent the following three cases: Only A exists, both A and B exist, and only B exists, where A may be in a singular or plural form, and B may be in a singular or plural form.

The term "at least one of" in this specification represents all or any combination of the listed items. For example, "at least one of A, B, and C" may represent the following six cases: Only A exists, only B exists, only C exists, both A and B exist, both B and C exist, and both A, B, and C exist, where A may be in a singular or plural form, B may be in a singular or plural form, and C may be in a singular or plural form.

A person of ordinary skill in the art may be aware that, in combination with the examples described in embodiments disclosed in this specification, units and algorithm steps can be implemented by electronic hardware or a combination of computer software and electronic hardware. Whether the functions are executed in a mode of hardware or software depends on particular applications and design constraint conditions of the technical solutions. A person skilled in the art may use different methods to implement the described functions of each particular application, but it does not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, each functional unit in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps in the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

For same or similar parts in embodiments of this application, refer to each other. In embodiments of this application and the implementations/implementing methods/implementation methods in the embodiments, unless otherwise specified or logically conflicting, terms and/or descriptions between different embodiments and between the implementations/implementing methods/implementation methods in the embodiments are consistent and may be mutually referenced, and technical features in different embodiments and implementations/implementing methods/implementation methods in the embodiments may be combined to form new embodiments, implementations, implementing methods, or implementation methods according to internal logical relationships. The foregoing implementations of this application are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, a protection scope of this application should be subject to a protection scope of the claims. In short, the foregoing descriptions are merely example embodiments of this application and are not intended to limit the protection scope of this application. Any modification, equivalent replacement, or improvement made without departing from the spirit and principle of this application shall fall within the protection scope of this application.

## Claims

1. A method based on network slice communication, applied to a terminal device, wherein the method comprises:
generating a first service identifier in response to a user operation, wherein the first service identifier is used to identify a currently to-be-performed first service;
determining, based on the first service identifier, first network slice selection assistance information S-NSSAI corresponding to the first service identifier, wherein the first S-NSSAI is used to indicate a first network slice corresponding to the first service;
determining, based on the first S-NSSAI, a target processing module of a data channel that is processed by using a co-processor, wherein the target processing module comprises at least some of all processing modules of the data channel; and
processing, by using the co-processor and through the target processing module, first data related to the first service.

2. The method according to claim 1, wherein the terminal device comprises an application module, a user route selection policy URSP module, and a protocol stack; and
the generating a first service identifier in response to a user operation comprises:
generating, by the application module, the first service identifier in response to the user operation; and the method further comprises:
sending, by the application module, the first service identifier to the URSP module;
the determining, based on the first service identifier, first S-NSSAI corresponding to the first service identifier comprises:
determining, by the URSP module, the first S-NSSAI based on the first service identifier; and the method further comprises:
sending, by the URSP module, the first S-NSSAI to the protocol stack;
the determining, based on the first S-NSSAI, a target processing module of a data channel that is processed by using a co-processor comprises:
determining, by the protocol stack, the target processing module based on the first S-NSSAI; and
the processing, by using the co-processor and through the target processing module, first data related to the first service comprises:
invoking, by the protocol stack, the co-processor, wherein the co-processor processes the first data through the target processing module.

3. The method according to claim 2, wherein after the sending, by the URSP module, the first S-NSSAI to the protocol stack, the method further comprises:
establishing, by the protocol stack, a packet data unit PDU session with a network device based on the first S-NSSAI;
generating, by the protocol stack, a slice service interface corresponding to the first S-NSSAI after establishment of the PDU session is completed;
sending, by the protocol stack, service interface information used to indicate the slice service interface to the URSP module;
determining, by the URSP module based on the slice service interface, a slice data interface corresponding to the slice service interface; and
sending, by the URSP module, data interface information used to indicate the slice data interface to the application module, to enable the application module to transmit service data through the slice data interface.

4. The method according to claim 2 or 3, wherein the application module is configured in an application layer, the URSP module is configured in an application framework layer, and the protocol stack is configured in a modem.

5. The method according to claim 2 or 3, wherein the application module is configured in an application layer, and both the URSP module and the protocol stack are configured in the application layer.

6. The method according to claim 5, wherein the protocol stack is configured in software-defined radio SDR, and the URSP module is configured in the SDR.

7. The method according to any one of claims 1 to 6, wherein the determining, based on the first S-NSSAI, a target processing module of a data channel that is processed by using a co-processor comprises:
determining, based on the first S-NSSAI, the target processing module corresponding to the first S-NSSAI in first correspondences between a plurality of pieces of S-NSSAI and a plurality of groups of processing modules, wherein one piece of S-NSSAI corresponds to at least one group of processing modules.

8. The method according to claim 7, wherein the first correspondences comprise an uplink correspondence and a downlink correspondence, wherein the uplink correspondence is used to indicate a one-to-one correspondence between M pieces of S-NSSAI and M groups of processing modules, the downlink correspondence is used to indicate a one-to-one correspondence between N pieces of S-NSSAI and N groups of processing modules, and both M and N are integers greater than or equal to 1.

9. The method according to any one of claims 1 to 8, wherein the determining, based on the first service identifier, first S-NSSAI corresponding to the first service identifier comprises:
determining, based on the first service identifier, the first S-NSSAI in second correspondences between a plurality of service identifiers and the plurality of pieces of S-NSSAI, wherein at least one service identifier corresponds to one piece of S-NSSAI.

10. The method according to any one of claims 1 to 9, wherein the target processing module comprises a first target processing module, the first target processing module is a processing module of a physical uplink shared channel PUSCH, and the first data comprises signaling or uplink service data that is transmitted through the PUSCH.

11. The method according to any one of claims 1 to 9, wherein the target processing module comprises a second target processing module, the second target processing module is a processing module of a physical downlink shared channel PDSCH, and the first data comprises signaling or downlink service data that is transmitted through the PDSCH.

12. The method according to any one of claims 1 to 9, wherein the target processing module comprises a first target processing module and a second target processing module, the first target processing module is a processing module of a physical uplink shared channel PUSCH, the second target processing module is a processing module of a physical downlink shared channel PDSCH, the first data comprises signaling or uplink service data that is transmitted through the PUSCH, and the first data comprises signaling or downlink service data that is transmitted through the PDSCH.

13. The method according to any one of claims 1 to 12, wherein the co-processor is any one of the following processors: a graphics processing unit GPU, an image signal processor ISP, a digital signal processor DSP, a neural network processor NPU, and a field-programmable gate array FPGA.

14. A terminal device, comprising:
a memory, configured to store computer instructions; and
a processor, configured to invoke the computer instructions stored in the memory, to perform the method according to any one of claims 1 to 13.

15. A computer-readable storage medium, configured to store computer instructions, wherein the computer instructions are used for implementing the method according to any one of claims 1 to 13.

16. A chip, wherein the chip comprises:
a memory, configured to store instructions; and
a processor, configured to invoke the instructions from the memory and run the instructions, to enable a terminal device in which the chip system is installed to perform the method according to any one of claims 1 to 13.
